# EUROPÄISCHE PATENTANMELDUNG

(11) **EP 1 873 891 A1**
(43) Veröffentlichungstag der Anmeldung: **02.01.2008**
(21) Anmeldenummer: 07011228.9
(22) Anmeldetag: 08.06.2007
(51) Int. Cl.: H02K 7/02, F16F 15/31

(54) **Mechanischer Energiespeicher mit Schwungmasse und Verfahren zum Betreiben eines solchen**

(30) Priorität: 01.07.2006 DE 102006030467
(71) Anmelder: Burger, Frank, 35321 Laubach (DE)
(72) Erfinder: Burger, Frank, 35321 Laubach (DE)
(74) Vertreter: Weiss, Ursula

(57) **Zusammenfassung**

Ein erfindungsgemäßer mechanischer Energiespeicher weist eine rotierbar gelagerte, zu Speicherung von Rotationsenergie dienende Schwungmasse und mit einem Antrieb auf, welcher bevorzugt ein Elektromotor (M) ist. Ferner weist der Energiespeicher einen Speicherbehälter (B) auf, welcher Teil der Schwungmasse ist und mittels des Motors (M) in Rotation versetzbar ist, und in welchen Flüssigkeit (W) einfüllbar ist, so dass die eingefüllte Flüssigkeit (W) an der Rotation des Speicherbehälters (B) teilnimmt und somit ebenfalls Teil der Schwungmasse ist, und diese durch Einfüllen von Flüssigkeit (W) in den Speicherbehälter (B) vergrößerbar und durch Entnahme von Flüssigkeit (W) aus dem Speicherbehälter (B) verminderbar ist. Zur Rückgewinnung der gespeicherten Energie dient vorzugsweise ein Generator (GR), welcher mit der Schwungmasse gekoppelt oder koppelbar ist. Gemäß einer sehr vorteilhaften Variante wird Energie durch Ablassen von Flüssigkeit (W) aus dem Speicherbehälter (B) zurückgewonnen.

## Beschreibung

### Technisches Gebiet:

Die Erfindung betrifft einen mechanischen Energiespeicher mit einer zu Speicherung von Rotationsenergie dienenden Schwungmasse und mit einem Motor, gemäß dem Oberbegriff von Anspruch 1, sowie ein Verfahren zum Betreiben eines solchen Energiespeichers gemäß dem Oberbegriff von Anspruch 23.

### Stand der Technik:

Mechanische Energiespeicher mit Schwungmasse sind im Stand der Technik bekannt. Ein Beispiel dafür ist der altbekannte Fliehkraftregeler. Ein anderes Beispiel sind Schwungräder, die z.B. in Fahrzeugen oder Antrieben verschiedenster Art zum Einsatz kommen. Aus der DE 10 2004 014 518 A1 ist z.B. ein druckluftbetriebener Kolbenmotor mit einer Schwungmasse bekannt, welche mit einem Übersetzungsverhältnis von mehr als 1:1 in schnelle Rotation versetzt werden kann. Aus der DE 200 19 119 U1 ist ein elektromechanischer Energiespeicher mit einem Massekreisel und einem Drehstromasynchronmotor bekannt, mit welchem eine Rückspeisung von Energie möglich ist.

Allen diesen Energiespeichern ist der Nachteil gemeinsam, dass der Betrag der gespeicherten Energie ausschließlich von der Drehzahl der Schwungmasse abhängt und folglich eine Erhöhung dieses Betrages nur durch eine Steigerung der Drehzahl erreicht werden kann. Ein Betrieb mit konstanter Drehzahl ist daher nicht möglich. Ein weiterer Nachteil dieser Energiespeicher besteht darin, dass auch in solchen Betriebszuständen, in denen nur kleine Energiebeträge gespeichert werden sollen, dennoch unverändert große Massen zu bewegen sind.

Ferner ist es in der Kraftwerktechnik bekannt, Energie dadurch mechanisch zu speichern, dass Wasser in ein höhergelegenes Reservoir, z.B. in einen auf einem Berg gelegenen Speichersee, gepumpt wird. Die Energie wird hier also als potentielle Energie gespeichert. Bei Bedarf wird Wasser aus dem Reservoir abgelassen und hierbei durch eine Turbine geleitet und auf diese Weise die potentielle Energie mit einem gewissen Wirkungsgrad zurückgewonnen. Derartige Energiespeicher dienen insbesondere zum Abfangen von Spitzen des Energieverbrauchs im Stromnetz. Das eigentliche Kraftwerk, z.B. Kohlekraftwerk, braucht bei zusätzlicher Ausrüstung mit einem solchen Energiespeicher also nur entsprechend dem Durchschnittsverbrauch plus einer Sicherheitsreserve, nicht aber entsprechend dem Spitzenverbrauch ausgelegt zu werden, wodurch in einem ganz erheblichen Umfang Kosten, Platz und Material gespart werden können.

Derartige Wasserreservoir-Energiespeicher sind aber mit dem Nachteil behaftet, dass ein ausreichend großes Reservoir zur Verfügung stehen oder eigens angelegt werden muss, was je nach den topographischen Gegebenheiten der Umgebung eine große Schwierigkeit darstellen kann und unter Umständen kilometerlange Wasserleitungen von erheblichem Durchmesser erforderlich macht. Die Nutzung eines natürlichen Sees als Reservoir ist z.B. aus Gründen des Naturschutzes und auch aus Sicherheitsgründen problematisch. Das Anlegen und Unterhalten von künstlichen Speicherseen oder Speicherbecken ist sehr teuer und aufwändig. Im Flachland sind derartige Energiespeicher nur unter größtem Aufwand realisierbar. Ferner sind derartige Wasserreservoir-Energiespeicher mit den weiteren Nachteilen behaftet, dass zur Energierückgewinnung eine Turbine benötigt wird und dass zur Energieumwandlung in beiden Richtungen, d.h. sowohl zur Energiespeicherung als auch zur Energierückgewinnung, stets sehr große Wassermengen bewegt werden müssen, wodurch der Aufwand, die Kosten und die Reibungsverluste steigen.

Des weiteren ist es in der Kraftwerkstechnik bekannt, zum Abfangen von Verbrauchsspitzen rein elektrische Energiepuffer zu verwenden, z.B. große Akkumulatoren. Diese Technik wird z.B. in der Stromversorgung für Bahnen angewandt. Nachteilig sind hier die lange Aufladezeit, welche ein Abfangen von schnellen Spitzen erschwert, sowie die hohen Kosten, die geringe Kapazität und die begrenzte Lebensdauer der Akkumulatoren.

### Technische Aufgabe:

Der Erfindung liegt die Aufgabe zu Grunde, einen mechanischen Energiespeicher zu schaffen, welcher mit den genannten Nachteilen nicht behaftet ist, keine Turbine benötigt, mit geringen Kosten herstellbar, besonders wirtschaftlich betreibbar und an praktisch jedem Standort einsetzbar ist, insbesondere auch im Flachland.

Diese Aufgabe wird erfindungsgemäß gelöst durch einen mechanischen Energiespeicher mit einer rotierbar gelagerten, zur Speicherung von Rotationsenergie dienenden Schwungmasse und mit einem Antrieb, insbesondere Motor, wobei der Energiespeicher einen Speicherbehälter aufweist, welcher Teil der Schwungmasse ist und mittels des Antriebs in Rotation um eine Rotationsachse versetzbar ist, und in welchen Flüssigkeit, z.B. Wasser oder Quecksilber, einfüllbar ist, so dass die eingefüllte Flüssigkeit an der Rotation des Speicherbehälters teilnimmt und somit ebenfalls Teil der Schwungmasse ist und diese durch Einfüllen von Flüssigkeit in den Speicherbehälter vergrößerbar und durch Entnahme von Flüssigkeit aus dem Speicherbehälter verminderbar ist.

Ein derartiger Energiespeicher kann insbesondere in der Weise betrieben werden, dass der zunächst leere Speicherbehälter in Rotation versetzt wird und anschließend immer mehr Flüssigkeit eingefüllt wird. Vorteilhaft ist hierbei, dass der Motor hierbei ständig in einem günstigen Drehzahlbereich gehalten werden kann und der Betrag der gespeicherten Energie dennoch, ohne Drehzahlanstieg, mit zunehmendem Füllstand der Flüssigkeit im Speicherbehälter ansteigt. Wenn nur ein kleiner Energiebetrag gespeichert werden soll, braucht nur eine geringe Menge an Flüssigkeit eingefüllt zu werden und folglich nur eine kleine Masse bewegt und in Rotation gehalten zu werden; die Bewegung einer unnötig großen Masse und entsprechende unnötige Reibungsverluste können dann vorteilhafterweise vermieden werden.

Ein weiterer Vorteil eines erfindungsgemäßen Energiespeichers besteht darin, dass die Flüssigkeit langsam in den rotierenden Behälter eingefüllt werden kann, so dass als Motor ohne weiteres ein solcher mit relativ geringer Leistung genügt. Wenn der Vorgang der Energiespeicherung durch eine allmählich erfolgende Befüllung des Speicherbehälters gleichmäßig auf einen längeren Zeitraum verteilt wird, können Spitzen der Motorleistung vermieden werden, so dass es nicht erforderlich ist, den Motor entsprechend solcher Spitzen zu dimensionieren. Vielmehr kann der Motor also relativ schwach ausgelegt werden. Hierdurch können Kosten, Gewicht, Platz sowie elektrische und mechanische Verlustleistung verringert werden. Vorzugsweise wird daher der Befüllungsprozess des Behälters so geführt, dass die gespeicherte Energie gleichmäßig (linear) mit der Zeit bis zu einem Maximalwert zunimmt; in diesem Fall ist eine minimale Dimensionierung des Motors möglich.

Der erfindungsgemäße Energiespeicher ist aus den genannten Gründen besonders wirtschaftlich betreibbar.

Die Aufgabe wird ferner gelöst durch ein Verfahren zum Betreiben eines mechanischen Energiespeichers, welcher eine rotierbar gelagerte, zur Speicherung von Rotationsenergie dienende Schwungmasse und einen Antrieb, insbesondere Motor, aufweist, wobei ein Speicherbehälter verwendet wird, welcher Teil der Schwungmasse ist und mittels des Antriebs in Rotation um eine Rotationsachse versetzbar ist, und in welchen Flüssigkeit, z.B. Wasser oder Quecksilber, einfüllbar ist, so dass die eingefüllte Flüssigkeit an der Rotation des Speicherbehälters teilnimmt und somit ebenfalls Teil der Schwungmasse ist, und Energie dadurch gespeichert wird, dass der Speicherbehälter mittels des Antriebs in Rotation versetzt und die in diesen eingefüllte Flüssigkeit in Rotation versetzt werden.

Gemäß einer Untervariante des Verfahrens wird der Speicherbehälter zunächst leer in Rotation versetzt und dann mir Flüssigkeit befüllt. Gemäß einer anderen Untervariante wird der Speicherbehälter zunächst befüllt und danach in Rotation versetzt. Die Rotationsachse steht vorzugsweise senkrecht. Die Rotationsrichtung wird vorzugsweise von oben gesehen gegen den Uhrzeigersinn gewählt.

Die Schwungmasse kann durch Einfüllen von Flüssigkeit in den Speicherbehälter vergrößert werden. Ebenso kann die Schwungmasse durch Entnahme von Flüssigkeit aus dem Speicherbehälter vermindert werden. Hierbei können vorteilhafterweise die Vergrößerung bzw. die Verminderung der Schwungmasse insbesondere bei rotierendem Speicherbehälter erfolgen.

Bevorzugt ist der Antrieb ein Elektromotor, so dass der Energiespeicher imstande ist, elektrische Energie in Rotationsenergie umzuwandeln und diese mittels der Schwungmasse zu speichern. Als Antrieb kann ein Elektromotor verwendet werden, mittels welchem zur Energiespeicherung elektrische Energie in Rotationsenergie umgewandelt wird. Der Antrieb kann alternativ z.B. ein Kolbenmotor sein.

Bevorzugt ist der Motor oder dessen Welle direkt ohne zwischengeschaltetes Getriebe starr mit dem Speicherbehälter verbunden oder z.B. über eine Kupplung starr mit dem Speicherbehälter verbindbar. Bei starrer Verbindung zwischen Motor oder dessen Welle und Speicherbehälter sind die Drehzahlen von Motor und Speicherbehälter stets gleich groß. Auf diese Weise fallen vorteilhafterweise keine Getriebeverluste oder Reibungsverluste z.B. durch Treibriemen an.

Gemäß einer Variante wird ein mit der Schwungmasse gekoppelter Generator verwendet, mittels welchem zur Energierückgewinnung wenigstens ein Teil der Rotationsenergie der Schwungmasse in elektrische Energie umgewandelt wird. Gemäß einer sehr vorteilhaften Variante der Erfindung weist der Energiespeicher einen Generator auf, welcher mit der Schwungmasse gekoppelt oder koppelbar ist und welcher imstande ist, wenigstens einen Teil der Rotationsenergie der Schwungmasse in elektrische Energie umzuwandeln. Die Rückgewinnung der gespeicherten Energie erfolgt gemäß dieser Ausführungsform der Erfindung also zumindest teilweise mittels des Generators. Eine Turbine ist nicht erforderlich. Folglich sind zur Energierückgewinnung mittels des Generators auch keine Entnahme von Flüssigkeit aus dem Speicherbehälter und keine Zuleitung von Flüssigkeit zur Turbine erforderlich; entsprechende Reibungsverluste treten also nicht auf.

Vorzugsweise ist der Motor mittels einer Kupplung von der Schwungmasse abkoppelbar. Bevorzugt wird der Prozess der Energierückgewinnung so geführt, dass die Energiezufuhr zum Motor unterbrochen und ggf. der Motor zur Vermeidung von Verlusten z.B. mittels der Kupplung von der Schwungmasse abgekoppelt wird, und der vom Generator aus der Rotationsenergie der Schwungmasse erzeugte Strom einem Verbraucher oder dem Stromnetz zugeführt wird, wobei sich die Rotation der Schwungmasse allmählich verlangsamt. Vorzugsweise wird hierbei so lange keine Flüssigkeit aus dem Speicherbehälter entnommen, bis die Rotation der Schwungmasse zum Stillstand gekommen ist.

Anschließend kann der stillstehende Speicherbehälter z.B. mittels einer Pumpe von der Flüssigkeit entleert werden. Danach kann ein neuer Vorgang der Energiespeicherung beginnen wie oben erläutert, wobei wiederum vorzugsweise zunächst der leere Speicherbehälter in Rotation versetzt wird und erst anschließend eine allmähliche Befüllung erfolgt. Vorzugsweise ist der Generator zur Vermeidung von Verlusten z.B. mittels einer Kupplung von der Schwungmasse abkoppelbar und bleibt abgekoppelt, solange keine Energierückgewinnung stattfindet.

Der Motor ist gemäß einer Ausführungsform imstande, als Generator zu fungieren, wobei Motor und Generator miteinander identisch sind; d.h. Motor und Generator können durch ein- und dasselbe Gerät gebildet sein, wobei die Funktion als Motor einem ersten und die Funktion als Generator einem zweiten Betriebszustand dieses Gerätes entspricht.

Gemäß einer sehr vorteilhaften Variante wird Energie durch Ablassen oder Entnehmen von Flüssigkeit aus dem Speicherbehälter zurückgewonnen. Zur Energierückgewinnung oder zu Vorbereitung derselben wird gemäß einer bevorzugten Variante der Erfindung durch Ablassen oder Entnehmen von Flüssigkeit aus dem Speicherbehälter über wenigstens eine an der Rotation desselben teilnehmende und daher die Rotationsachse mit einer bestimmten Bahngeschwindigkeit umlaufende Auslassöffnung ein auf den Speicherbehälter oder die Schwungmasse wirkendes Drehmoment erzeugt, welches die Rotation des Speicherbehälters (B) zu beschleunigen imstande ist oder zu beschleunigen versucht.

Gemäß einer bevorzugten Untervariante wird der über die Auslassöffnung abgegebene Flüssigkeitsstrom und damit auch das hierdurch verursachte Drehmoment auf den Speicherbehälter (B) mittels einer Stellvorrichtung dosiert. Insbesondere kann hierbei sehr vorteilhaft der abgegebene Flüssigkeitsstrom (d.h. der durch die Auslassöffnung strömende Massefluss) gezielt so dosiert werden, dass bei Energierückgewinnung die Drehzahl konstant gehalten wird und lediglich die Masse der Schwungmasse, nicht aber ihre Drehzahl abnimmt.

Gemäß einer Variante wird zur Dosierung des über die Auslassöffnung abgegebenen Flüssigkeitsstroms der Durchmesser oder die Größe der Auslassöffnung mittels der Stellvorrichtung fernbetätigt verändert.

Gemäß einer Ausführungsform weist der Speicherbehälter der Speicherbehälter wenigstens eine an der Rotation desselben teilnehmende und daher die Rotationsachse mit einer bestimmten Bahngeschwindigkeit umlaufende Auslassöffnung auf, über welche aus dem Speicherbehälter Flüssigkeit unter Abgabe von kinetischer Energie oder Drehimpuls an die Schwungmasse so entnehmbar oder ablassbar ist, dass die Rotation der Schwungmasse durch Entnehmen oder Ablassen von Flüssigkeit über die Auslassöffnung antreibbar, zusätzlich antreibbar oder beschleunigbar ist.

Gemäß einer Variante wird über die Auslassöffnung Flüssigkeit so aus dem Speicherbehälter abgelassen oder entnommen, dass hierbei kinetische Energie oder Drehimpuls an die Schwungmasse abgegeben und hierdurch die Rotation des Speicherbehälter beschleunigt, angetrieben oder zusätzlich angetrieben wird.

Gemäß einer bevorzugten Ausführungsform der Erfindung weist der Speicherbehälter wenigstens eine an der Rotation desselben teilnehmende und daher die Rotationsachse mit einer bestimmten Bahngeschwindigkeit umlaufende Auslassöffnung auf, über welche aus dem Speicherbehälter Flüssigkeit so entnehmbar oder ablassbar ist, dass ein auf den Speicherbehälter oder die Schwungmasse wirkendes Drehmoment entsteht, welches die Rotation des Speicherbehälters zu beschleunigen imstande ist oder zu beschleunigen versucht.

In dem Fall z.B., dass die Drehzahl des Speicherbehälters durch Energieentnahme über den Generator konstant gehalten wird, tritt durch das Drehmoment keine Beschleunigung der Rotation ein. Das Drehmoment versucht jedoch auch in diesem Fall, die Rotation zu beschleunigen, d.h. dass erfindungsgemäß durch Ablassen oder Entnahme von Flüssigkeit verursachte Drehmoment wirkt erfindungsgemäß der Rotation nicht entgegen, sondern unterstützt die Rotation.

Die Auslassöffnung kann insbesondere fernbetätigt öffenbar und verschließbar sein. Gemäß einer weiteren Variante ist der über die Auslassöffnung abgegebene Flüssigkeitsstrom mittels einer Stellvorrichtung fernbetätigt zwischen dem Wert Null und einem Höchstwert dosierbar, vorzugsweise stufenlos.

Die durch die Auslassöffnung austretende Flüssigkeit wird gemäß einer Variante in Bezug auf die Auslassöffnung senkrecht nach unten abgegeben oder mit einer nach unten gerichteten Geschwindigkeitskomponente abgegeben. Die Auslassöffnung kann so angeordnet sein, dass die durch dieselbe aus dem Speicherbehälter austretende Flüssigkeit beim Durchströmen der Auslassöffnung senkrecht nach unten gerichtet ist oder eine nach unten gerichtete Geschwindigkeitskomponente aufweist.

Bevorzugt wird die Auslassöffnung so orientiert, dass die austretende Flüssigkeit beim Durchströmen der Auslassöffnung bezüglich derselben eine Strömungsrichtung aufweist, welche der Bahngeschwindigkeit der Auslassöffnung (bzw. der Richtung der Bahngeschwindigkeit) entgegengerichtet ist oder eine der Bahngeschwindigkeit der Auslassöffnung (bzw. der Richtung der Bahngeschwindigkeit) entgegengerichtete Komponente aufweist, und durch Entnehmen oder Ablassen von Flüssigkeit über die Auslassöffnung aufgrund des Rückstoßes der austretenden Flüssigkeit ein Drehmoment auf den Speicherbehälter erzeugt welches die Rotation des Speicherbehälters zu beschleunigen imstande ist oder zu beschleunigen versucht.

Bevorzugt ist die Auslassöffnung so orientiert, dass die austretende Flüssigkeit beim Durchströmen der Auslassöffnung bezüglich derselben eine Strömungsrichtung aufweist, welche der Bahngeschwindigkeit der Auslassöffnung (bzw. der Richtung der Bahngeschwindigkeit) entgegengerichtet ist oder eine der Bahngeschwindigkeit der Auslassöffnung (bzw. der Richtung der Bahngeschwindigkeit) entgegengerichtete Komponente aufweist, so dass der Rückstoß der austretenden Flüssigkeit ein Drehmoment auf den Speicherbehälter ausübt, welches die Rotation des Speicherbehälters zu beschleunigen imstande ist oder zu beschleunigen versucht.

In dem Fall z.B., dass die Drehzahl des Speicherbehälters durch Energieentnahme über den Generator konstant gehalten wird, gleicht die Rückstoßenergie die Energieentnahme aus, so dass durch den Rückstoß keine Beschleunigung der Rotation eintritt. Das durch den Rückstoß verursachte Drehmoment versucht jedoch auch in diesem Fall, die Rotation zu beschleunigen, d.h. dass vom Rückstoß der austretenden Flüssigkeit verursachte Drehmoment wirkt erfindungsgemäß der Rotation nicht entgegen, sondern unterstützt die Rotation bzw. treibt sie an oder treibt sie zusätzlich zu dem Antrieb an.

Bevorzugt ist der Abstand der Auslassöffnung von der Rotationsachse verstellbar und hierdurch die Ausströmgeschwindigkeit der durch die Auslassöffnung austretenden Flüssigkeit veränderbar. Ebenso kann die Orientierung der Auslassöffnung und damit die auf den Speicherbehälter bezogene Richtung der ausströmenden Flüssigkeit veränderbar oder verstellbar sein.

Gemäß einer Variante wird der Abstand der Auslassöffnung von der Rotationsachse so gewählt oder mittels einer Verstelleinrichtung so eingestellt, dass die austretende Flüssigkeit beim Durchströmen der Auslassöffnung bezüglich derselben eine Ausströmgeschwindigkeit aufweist, deren Betrag vom Betrag der Bahngeschwindigkeit der Auslassöffnung um höchstens 30%, bevorzugt um höchstens 10%, abweicht.

Gemäß einer besonders vorteilhaften Ausführungsform ist der Abstand der Auslassöffnung von der Rotationsachse so gewählt oder mittels einer Verstelleinrichtung so einstellbar, dass die austretende Flüssigkeit beim Durchströmen der Auslassöffnung bezüglich derselben eine Ausströmgeschwindigkeit aufweist, deren Betrag vom Betrag der Bahngeschwindigkeit der Auslassöffnung um höchstens 30%, bevorzugt um höchstens 10%, abweicht. Die Ausströmgeschwindigkeit ist auf die Auslassöffnung bezogen. Bezogen auf einen außenstehenden, ruhenden Beobachter tritt die Flüssigkeit daher mit einer Geschwindigkeit aus der Auslassöffnung aus, deren Betrag höchstens 30%, bevorzugt höchstens 10% des Betrages der Bahngeschwindigkeit der Auslassöffnung beträgt.

Gemäß einer bevorzugten Variante wird mittels der Verstellvorrichtung der Abstand der Auslassöffnung von der Rotationsachse bei sich veränderndem Befüllungsgrad des Speicherbehälters automatisch so nachgestellt, dass die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer weiteren bevorzugten Variante wird mittels der Verstellvorrichtung der Abstand der Auslassöffnung von der Rotationsachse bei sich verändernder Drehzahl des Speicherbehälters automatisch so nachgestellt, dass die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer weiteren bevorzugten Variante wird mittels der Verstellvorrichtung der Abstand der Auslassöffnung von der Rotationsachse bei sich veränderndem Befüllungsgrad und sich gleichzeitig verändernder Drehzahl des Speicherbehälters automatisch so nachgestellt wird, dass die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer bevorzugten Ausführungsform ist die Verstellvorrichtung imstande, den Abstand der Auslassöffnung von der Rotationsachse bei sich veränderndem Befüllungsgrad des Speicherbehälters automatisch so nachzustellen, dass trotz des sich verändernden Befüllungsgrades die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer bevorzugten Ausführungsform ist die Verstellvorrichtung imstande, den Abstand der Auslassöffnung von der Rotationsachse bei sich verändernder Drehzahl des Speicherbehälters automatisch so nachzustellen, dass trotz der sich verändernden Drehzahl die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer bevorzugten Ausführungsform ist die Verstellvorrichtung imstande, den Abstand der Auslassöffnung von der Rotationsachse bei sich veränderndem Befüllungsgrad und sich gleichzeitig verändernder Drehzahl des Speicherbehälters des Speicherbehälters automatisch so nachzustellen, dass trotz des sich verändernden Befüllungsgrades und trotz der sich verändernden Drehzahl die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Die Ausströmgeschwindigkeit, mit welcher die ausströmende Flüssigkeit die Auslassöffnung durchströmt, wird gemäß einer weiteren Variante mittels einer der Auslassöffnung vorgeschalteten Beeinflussungseinrichtung, insbesondere Druckverminderer, verändert, begrenzt oder auf einen bestimmten Wert eingestellt. Gemäß einer Ausführungsform der Erfindung ist der Auslassöffnung eine Beeinflussungseinrichtung, insbesondere Druckverminderer, vorgeschaltet, welche imstande ist, die Ausströmgeschwindigkeit, mit welcher die ausströmende Flüssigkeit die Auslassöffnung durchströmt, zu verändern, zu begrenzen oder auf einen bestimmten Wert einzustellen.

Gemäß einer Variante wird die Ausströmgeschwindigkeit der durch die Auslassöffnung austretenden Flüssigkeit mittels der Beeinflussungseinrichtung so eingestellt, dass die austretende Flüssigkeit beim Durchströmen der Auslassöffnung bezüglich derselben eine Ausströmgeschwindigkeit aufweist, deren Betrag vom Betrag der Bahngeschwindigkeit der Auslassöffnung um höchstens 30%, bevorzugt um höchstens 10%, abweicht. Bevorzugt ist die Ausströmgeschwindigkeit der durch die Auslassöffnung austretenden Flüssigkeit mittels der Beeinflussungseinrichtung so einstellbar, dass die austretende Flüssigkeit beim Durchströmen der Auslassöffnung bezüglich derselben eine Ausströmgeschwindigkeit aufweist, deren Betrag vom Betrag der Bahngeschwindigkeit der Auslassöffnung um höchstens 30%, bevorzugt um höchstens 10%, abweicht.

Gemäß einer Variante wird mittels der Beeinflussungseinrichtung
- die Ausströmgeschwindigkeit bei sich veränderndem Befüllungsgrad des Speicherbehälters automatisch so nachgestellt,
dass die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer weiteren Variante wird mittels der Beeinflussungseinrichtung die Ausströmgeschwindigkeit bei sich verändernder Drehzahl des Speicherbehälters automatisch so nachgestellt, dass die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer weiteren Variante wird mittels der Beeinflussungseinrichtung die Ausströmgeschwindigkeit bei sich veränderndem Befüllungsgrad und sich gleichzeitig ändernder Drehzahl des Speicherbehälters (B) automatisch so nachgestellt, dass die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer vorteilhaften Variante ist die Beeinflussungseinrichtung imstande, die Ausströmgeschwindigkeit bei sich veränderndem Befüllungsgrad des Speicherbehälters automatisch so nachzustellen, dass trotz des sich ändernden Befüllungsgrades die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer vorteilhaften Variante ist die Beeinflussungseinrichtung imstande, die Ausströmgeschwindigkeit bei sich verändernder Drehzahl des Speicherbehälters automatisch so nachzustellen, dass trotz der sich verändernden Drehzahl die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Gemäß einer vorteilhaften Variante ist die Beeinflussungseinrichtung imstande, die Ausströmgeschwindigkeit bei sich veränderndem Befüllungsgrad und sich gleichzeitig ändernder Drehzahl des Speicherbehälters automatisch so nachzustellen, dass trotz des sich ändernden Befüllungsgrades und trotz der sich verändernden Drehzahl die relative Abweichung zwischen dem Betrag der auf die Auslassöffnung bezogenen Ausströmgeschwindigkeit und dem Betrag der Bahngeschwindigkeit unter 30%, bevorzugt unter 10%, bleibt.

Bevorzugt ist die Ausströmgeschwindigkeit in Richtung und Betrag so gewählt bzw. eingestellt oder automatisch einstellbar, dass sie der Bahngeschwindigkeit der Auslassöffnung entgegengesetzt gleich ist, so dass die ausströmende Flüssigkeit in Bezug auf einen außenstehenden, ruhenden Beobachter keine Bahngeschwindigkeit besitzt.

Gemäß einer Variante wird die Auslassöffnung so angeordnet, dass diejenige Verbindungslinie von der Mitte der Auslassöffnung zur Rotationsachse, welche zur Oberfläche der Flüssigkeit oder zur Extrapolation der Oberfläche nach außerhalb des Speicherbehälters senkrecht steht, um einen Faktor X länger ist als derjenige Teil dieser Verbindungslinie, welcher von der Rotationsachse bis zur Oberfläche oder bis zur Extrapolation der Oberfläche reicht, wobei der Faktor X eine Zahl zwischen 1,3 und 1,55, bevorzugt zwischen 1,40 und 1,45 ist.

Gemäß einer bevorzugten Ausführungsform ist diejenige Verbindungslinie von der Mitte der Auslassöffnung zur Rotationsachse, welche zur Oberfläche der Flüssigkeit oder zur Extrapolation der Oberfläche nach außerhalb des Speicherbehälters senkrecht steht, um einen Faktor X länger ist als derjenige Teil dieser Verbindungslinie, welcher von der Rotationsachse bis zur Oberfläche oder bis zur Extrapolation der Oberfläche reicht, wobei der Faktor X eine Zahl zwischen 1,3 und 1,55, bevorzugt zwischen 1,40 und 1,45 ist. Die Auslassöffnung braucht nicht kreisförmig zu sein. Die Auslassöffnung kann eine beliebige Fläche aufspannen; deren Mitte ist dann durch den Flächenschwerpunkt gegeben.

Die oben erläuterten Ausführungsformen der Erfindung mit der Möglichkeit der Energierückgewinnung durch Ablassen bzw. Entnehmen von Flüssigkeit durch die Auslassöffnung bzw. die Auslassöffnungen weisen den Vorteil auf, dass auch bei Energierückgewinnung die Drehzahl der Schwungmasse konstant bleiben bzw. weiterhin auf einen Sollwert geregelt werden kann; eine Abbremsung der Rotation ist zur Energierückgewinnung nicht erforderlich. Diese Ausführungsformen sind daher insbesondere dann von großem Vorteil, wenn schnelle Wechsel von Energiespeicherung und Energierückgewinnung stattfinden sollen. Eine Zunahme der gespeicherten Energie kann durch Zufuhr von Flüssigkeit in den Speicherbehälter ohne Drehzahlveränderung erreicht werden, Energierückgewinnung durch Entnahme von Flüssigkeit aus dem Speicherbehälter über die Auslassöffnung bzw. die Auslassöffnungen. Dies ist ebenfalls ohne Drehzahländerung möglich. Zwischen diesen beiden Betriebsarten kann beliebig gewechselt werden; prinzipiell können beide Betriebsarten sogar zugleich ablaufen.

Gemäß einer Variante ist der Durchmesser oder die Größe der Auslassöffnung fernbetätigt veränderbar. Hierdurch kann z.B. eine Dosierbarkeit des durch die Auslassöffnung austretenden Flüssigkeitsstroms realisiert werden.

Gemäß einer Variante wird zur Energiespeicherung Flüssigkeit in den Speicherbehälter eingefüllt und hierbei die Drehzahl desselben konstant gehalten. Gemäß einer weiteren Variante wird zur Energierückgewinnung Flüssigkeit aus dem Speicherbehälter abgelassen oder entnommen und hierbei die Drehzahl des Speicherbehälters konstant gehalten. Bei Energierückgewinnung nach dem oben erläuterten Rückstoßprinzip z.B. kann die Rückstoßenergie sofort durch den Generator bei gleich bleibender Drehzahl in elektrische Energie umgewandelt werden. Soll die rückgewonnene Leistung erhöht werden, kann der Massefluß der austretenden Flüssigkeit höher dosiert, d.h. vergrößert werden, z.B. durch Vergrößern der Auslassöffnung. Soll die rückgewonnene Leistung verringert werden, kann der Massefluß der austretenden Flüssigkeit niedriger dosiert, d.h. verkleinert werden, z.B. durch Verkleinern der Auslassöffnung. All dies ist erfindungsgemäß insbesondere bei konstanter Drehzahl möglich.

Gemäß einer weiteren Variante wird zur Energierückgewinnung Flüssigkeit aus dem rotierenden Speicherbehälter einer Kraftmaschine, insbesondere Turbine oder Hydraulikmotor, so zugeführt, dass die der Kraftmaschine zugeführte Flüssigkeit die Kraftmaschine unter Abgabe von kinetischer Energie antreibt und die Kraftmaschine auf diese Weise imstande ist, wenigstens einen Teil der Rotationsenergie der Schwungmasse in elektrische Energie umzuwandeln. Gemäß einer Variante der Erfindung weist der Energiespeicher eine Kraftmaschine auf, welcher Flüssigkeit aus dem rotierenden Speicherbehälter so zuführbar ist, dass die der Kraftmaschine zugeführte Flüssigkeit die Kraftmaschine unter Abgabe von kinetischer Energie antreibt und die Kraftmaschine auf diese Weise imstande ist, wenigstens einen Teil der Rotationsenergie der Schwungmasse in elektrische Energie umzuwandeln. Die Kraftmaschine kann insbesondere eine Turbine oder ein Hydraulikmotor sein. Die Rückgewinnung der gespeicherten Energie erfolgt gemäß dieser Ausführungsform der Erfindung also zumindest teilweise mittels der Kraftmaschine.

Auch eine Ausführungsform der Erfindung mit Energierückgewinnung durch eine derartige Kraftmaschine weist den Vorteil auf, dass auch bei Energierückgewinnung die Drehzahl der Schwungmasse konstant bleiben bzw. weiterhin auf den Sollwert geregelt werden kann.

Gemäß einer bevorzugten Variante dient zur Zuführung von Flüssigkeit aus dem rotierenden Speicherbehälter zu der Kraftmaschine ein Eintauchrohr mit einer Einlauföffnung dient, welche so in die im Speicherbehälter befindliche Flüssigkeit eintauchbar ist, dass im Speicherbehälter befindliche Flüssigkeit aufgrund ihrer Rotationsbewegung durch die Einlauföffnung und das Eintauchrohr zu der Kraftmaschine strömt und diese unter Abgabe von kinetischer Energie antreibt. Die Entnahme der zum Antrieb der Kraftmaschine benötigten Flüssigkeit aus dem Speicherbehälter erfolgt also bevorzugt mittels des Eintauchrohres, in welches die rotierende Flüssigkeit mit hoher Geschwindigkeit einströmt und von dort zur Kraftmaschine gelangt.

Um Reibungsverluste zu vermeiden, welche dadurch bedingt sind, dass das Eintauchrohr unnötig die tief in die rotierende Flüssigkeit eintaucht, ist die Einlauföffnung gemäß einer vorteilhaften Variante der Erfindung bei in die Flüssigkeit eingetauchtem Eintauchrohr dem Flüssigkeitsstand im Speicherbehälter oder dem Befüllungsgrad des Speicherbehälters unter Wahrung einer vorgebbaren Eintauchtiefe automatisch nachführbar. Die Eintauchtiefe kann insbesondere z.B. unabgängig vom Befüllungsgrad als Konstante vorgegeben sein. Vorzugsweise wird die Einlauföffnung ständig dicht unter der Oberfläche der Flüssigkeit im Speicherbehälter gehalten.

Selbstverständlich kann der Energiespeicher sowohl mit einem Generator als auch mit einer Turbine ausgestattet sein, so dass eine Energierückgewinnung sowohl mittels des Generators als auch mittels der Turbine möglich ist.

Gemäß einer Ausführungsform der Erfindung ist der Antrieb imstande, unabhängig vom Füllstand der Flüssigkeit im Speicherbehälter die Drehzahl des Speicherbehälters konstant zu halten. Die einer derartigen Ausführungsform ist der Vorteil verbunden, dass der Betrag der gespeicherten Energie nur vom Füllstand abhängt.

Gemäß einer weiteren Ausführungsform der Erfindung ist der Antrieb mit einer Regelungseinheit verbunden, mittels welcher er imstande ist, unabhängig vom Füllstand der Flüssigkeit im Speicherbehälter die Drehzahl des Speicherbehälters auf einen vorgebbaren Sollwert einzuregeln. Sofern die Drehzahl dem Sollwert entspricht, ist auch mit dieser Ausführungsform der Vorteil verbunden, dass der Betrag der gespeicherten Energie nur vom Füllstand abhängt.

Gemäß einer Variante wird mittels des Antriebs unabhängig vom Füllstand der Flüssigkeit im Speicherbehälter die Drehzahl des Speicherbehälters konstant gehalten. Gemäß einer weiteren Variante wird mittels des Antriebs und einer damit verbundenen Regelungseinheit unabhängig vom Füllstand der Flüssigkeit im Speicherbehälter die Drehzahl des Speicherbehälters auf einen vorgebbaren Sollwert geregelt.

Eine konstante oder auf einen Sollwert geregelte Drehzahl des Speicherbehälters ist insbesondere während der Energiespeicherung sinnvoll. Zu Beginn des Speichervorgangs kann insbesondere der leere Speicherbehälter auf eine konstante oder auf den Sollwert geregelte Drehzahl gebracht und anschließend bei weiterhin konstanter oder auf den Sollwert geregelter Drehzahl allmählich Flüssigkeit eingefüllt werden. Vorzugsweise wird die konstante oder die auf den Sollwert geregelte Drehzahl auch dann weiterhin beibehalten, wenn der Befüllungsvorgang beendet ist, und zwar so lange, bis die Energierückgewinnung beginnt.

Gemäß einer platzsparenden Ausführungsform der Erfindung weist die Schwungsmasse einen zentralen Hohlraum auf. Dort kann z.B. der Antrieb angeordnet sein. Gemäß einer weiteren platzsparenden Ausführungsform oder Untervariante der Erfindung weist die Schwungsmasse einen zentralen Hohlraum auf, in welchem der Generator angeordnet ist. Gemäß einer weiteren platzsparenden Ausführungsform der Erfindung sind Antrieb und Generator beide im dem zentralen Hohlraum angeordnet.

Gemäß einer Ausführungsform der Erfindung weist der Energiespeicher einen Pufferbehälter auf, welcher nicht an der Rotation des Speicherbehälters teilnimmt und als Zwischenspeicher für die Flüssigkeit dient, wobei Flüssigkeit aus dem Pufferbehälter in den Speicherbehälter einleitbar oder förderbar ist und Flüssigkeit, welche aus dem Speicherbehälter ausgetreten ist oder entnommen wurde, in den Pufferbehälter einleitbar oder förderbar ist.

Insbesondere kann der Pufferbehälter oberhalb des Speicherbehälters angeordnet und über eine Leitung mit demselben verbunden sein, wobei in der Leitung ein Absperrventil zwischengeschaltet ist, so dass Flüssigkeit aufgrund der Einwirkung der Schwerkraft allein durch Öffnen des Absperrventils vom Pufferbehälter in den Speicherbehälter einleitbar ist, ohne dass eine Fördereinrichtung benötigt wird. Zum Einleiten von Flüssigkeit aus dem Speicherbehälter zurück in den Pufferbehälter kann eine Pumpe oder sonstige Fördereinrichtung dienen. Bevorzugt ist das Volumen des Pufferbehälters mindestens so groß wie das Volumen des Speicherbehälters.

Gemäß einer bevorzugten Weiterbildung der Variante mit Kraftmaschine bzw. Turbine oder Hydraulikmotor gelangt die Flüssigkeit nach Passieren oder Durchströmen der Kraftmaschine bzw. Turbine in den Pufferbehälter.

Durch Einleitung von Flüssigkeit aus dem Pufferbehälter in den Speicherbehälter während des Energiespeicherungsvorgangs und der Rückführung dieser Flüssigkeit in den Pufferbehälter während oder nach der Energierückgewinnung befindet sich die Flüssigkeit in einem Kreislauf, so dass der Energiespeicher, abgesehen von marginalen Verlusten z.B. durch Verdunstung, nichts von der Flüssigkeit verbraucht und insbesondere keine Abflussleitung nach außen vorgesehen zu werden braucht. Da der Energiespeicher bzw. der Pufferbehälter vor der ersten Inbetriebnahme z.B. aus einem Tankwagen befüllt werden kann, ist prinzipiell auch keine Zuflussleitung von außen erforderlich.

Da somit zum Betrieb eines erfindungsgemäßen Energiespeichers weder eine Zuflussleitung noch eine Abflussleitung noch ein hochgelegenes Wasserreservoir, z.B. Speichersee, benötigt werden, kann ein erfindungsgemäßer Energiespeicher praktisch an jedem Standort installiert werden, insbesondere ohne weiteres auch im Flachland. Auch aus diesen Gründen ist ein erfindungsgemäßer Energiespeicher an praktisch jedem Standort besonders wirtschaftlich betreibbar.

Gemäß einer vorteilhaften Variante sind der Speicherbehälter und der Pufferbehälter Teile eines geschlossenen Systems oder geschlossenen Kreislaufs, in welchem sich die Flüssigkeit befindet, so dass Flüssigkeitsverluste durch Verdunstung oder sonstiges Entweichen von Flüssigkeit vermieden werden.

Gemäß einer sehr zweckmäßigen Ausführungsform der Erfindung ist der Speicherbehälter in einem nicht an der Rotation des Speicherbehälters teilnehmenden Gehäuse rotierbar gelagert. Gemäß einer Variante sind alle Komponenten des Energiespeichers in dem Gehäuse angeordnet. Das Gehäuse kann z.B. aus Sicherheits- und Stabilitätsgründen im Erdboden versenkt angeordnet sein.

Das Gehäuse kann einen Zwischenboden aufweisen, wobei der oberhalb des Zwischenbodens gelegene Teil des Innenraums des Gehäuses den Pufferbehälter bildet. Mit dieser Ausführungsform ist der Vorteil verbunden, dass das auf dem Gehäuse lastende Gesamtgewicht nicht vom Füllstand der Flüssigkeit im Speicherbehälter abhängt. Dies kann aus Stabilitätsgründen oder z.B. zu Vermeidung von Vibrationen des Gehäuses zweckmäßig sein. Der Pufferbehälter kann z.B. als nach oben offenes Becken ausgebildet sein. Das Gehäuse kann insbesondere aus Beton, Stahlbeton oder Spannbeton bestehen. Das Gehäuse kann oben offen sein.

Gemäß einer bevorzugten Ausführungsform enthält der Speicherbehälter in seinem Inneren eine oder eine Mehrzahl von Streben, Schaufeln, Flügeln oder Mitnehmern, welche zur Drehimpulsübertragung zwischen dem Speicherbehälter und der darin befindlichen Flüssigkeit beizutragen imstande sind. Durch eine derartige Ausgestaltung wird dafür gesorgt, dass sich eine Beschleunigung oder Abbremsung der Rotation des Speicherbehälters schnell auf die Flüssigkeit überträgt, wodurch die Energieverluste durch innere Reibung in der Flüssigkeit wesentlich vermindert werden. Die Streben, Schaufeln, Flügeln oder Mitnehmer können insbesondere so angeordnet sein, dass sie den Speicherbehälter in eine Mehrzahl von Segmenten unterteilen, welche über Öffnungen, Aussparungen, Bohrungen oder Ausgleichsrohre miteinander hydrostatisch kommunizieren.

Gemäß einer Ausführungsform weist der Speicherbehälter wenigstens eine Entnahmeöffnung auf, über welche aus dem Speicherbehälter bei Rotation desselben unter Druck stehende Flüssigkeit druckdicht entnehmbar ist und welche druckdicht in eine Druckleitung mündet, so dass dieselbe unter Druck stehende Flüssigkeit aus dem Speicherbehälter enthält, wobei die Druckleitung in einen Zusatzmechanismus mündet, welcher über die Druckleitung mit aus dem Speicherbehälter kommender, unter Druck stehender Flüssigkeit antreibbar ist, und wobei der über die Druckleitung angetriebene Zusatzmechanismus die Rotation des Speicherbehälters zu beschleunigen imstande ist oder zu beschleunigen versucht.

Gemäß einer Variante weist der Speicherbehälter wenigstens eine Entnahmeöffnung auf, über welche zur Energierückgewinnung oder zur Vorbereitung derselben aus dem Speicherbehälter bei Rotation desselben unter Druck stehende Flüssigkeit druckdicht entnommen und druckdicht einem Zusatzmechanismus zugeführt wird, welcher hierdurch mit aus dem Speicherbehälter kommender Flüssigkeit angetrieben wird und die Rotation des Speicherbehälters beschleunigt oder zu beschleunigen versucht.

Bei den in der Betriebspraxis eines erfindungsgemäßen Energiespeichers auftretenden Trägheitskräften kann bereits eine vorübergehende, geringe Unwucht erhebliche Probleme bereiten. Gemäß einer bevorzugten Variante wird daher zur Vermeidung von Unwucht die Zufuhr von Flüssigkeit in den Speicherbehälter und die Entnahme oder das Ablassen von Flüssigkeit aus dem Speicherbehälter jeweils achsensymmetrisch zur Rotationsachse vorgenommen. Die Auslassöffnungen sind daher bevorzugt jeweils paarweise einander gegenüberliegend angeordnet.

Gemäß einer vorteilhaften Variante des erfindungsgemäßen Verfahrens wird zur Rückgewinnung von Rotationsenergie eines Netzgenerators, insbesondere eines solchen, welcher in einem Kraftwerk betrieben wird, und welcher zur Einspeisung von elektrischer Energie in ein Stromnetz vorgesehen ist und von seinem Antriebsaggregat, z.B. Dampfturbine, und vom Stromnetz, abgekoppelt ist und mit einer Drehzahl N1 1 rotiert, ein Getriebe verwendet und vorgegangen wie folgt:
a) der Speicherbehälter wird bei vom Stromnetz elektrisch abgekoppeltem Generator mittels des Antriebs auf eine vorgebbare Drehzahl B1 gebracht, welche sich von N1 um einen Faktor X1 unterscheidet, wobei X1 das Übersetzungsverhältnis des Getriebes ist, so dass N1 = X1*B1 und B1 = N1/X1 gilt,
b) die Wellen des Netzgenerators und des Generators werden über das Getriebe gekoppelt,
c) in den Speicherbehälter wird Flüssigkeit eingefüllt, bis seine Drehzahl auf einen Wert B2 und die Drehzahl des Netzgenerators von N1 auf einen Wert N2=N1*(B2/B1) gesunken ist,
d) die Wellen des Netzgenerators und des Generators werden voneinander abgekoppelt,
e) durch Ablassen oder Entnehmen von Flüssigkeit über die Auslassöffnung ein Drehmoment auf den Speicherbehälter erzeugt, welches die Rotation desselben beschleunigt, bis seine Drehzahl wieder den Wert B1 erreicht hat,
f) der Generator GR wird elektrisch an das Stromnetz angekoppelt,
g) durch weiteres Ablassen von Flüssigkeit über die Auslassöffnung wird ein Drehmoment auf den Speicherbehälter erzeugt, welches die Rotation desselben zu beschleunigen versucht, und die hierdurch zurückgewonnene Energie ohne Änderung der Drehzahl des Speicherbehälters vom Generator in elektrische Energie umgewandelt und in das Stromnetz eingespeist.

Nach Ausführung dieser Schritte ist Drehzahl des Netzgenerators gegenüber dem Anfangswert N1 verringert und ein Teil seiner Rotationsenergie in das Stromnetz eingespeist. Bevorzugt wird diese Vorgehensweise mehrmals nacheinander, jeweils entsprechend dem jeweiligen Anfangswert der Drehzahl des Netzgenerators, durchgeführt und hierbei derselbe jedes Mal weiter abgebremst und ein Teil seiner Rotationsenergie in das Stromnetz eingespeist. Bevorzugt wird die Drehzahl B1 zu 3000 U/min vorgegeben.

Bevorzugt wird der Speicherbehälter nicht vollständig mit Flüssigkeit gefüllt, sondern z.B. nur zu 70%, zu 80%, zu 90% oder zu 95%.

Ein erfindungsgemäßer Energiespeicher eignet sich insbesondere zum Anfangen von Verbrauchsspitzen in der Kraftwerkstechnik. Bestehende Kraftwerke können ohne weiteres mit einem oder mehreren erfindungsgemäßen Energiespeichern nachgerüstet werden.

Bei der Energiegewinnung mittels Windkrafträdern z.B. hängt die Energiegewinnung direkt von der Windgeschwindigkeit ab. Hier kann somit keine Mindestleistung der Energiegewinnung garantiert werden. Im ungünstigsten Fall treffen Flaute und Verbrauchsspitze zeitlich zusammen. Aus diesem Grund sind eine Ersetzung von herkömmlichen Kraftwerken durch Windkraftanlagen bzw. ein hoher Anteil an Windenergie für die Sicherstellung der Stromversorgung bislang sehr problematisch. Hierdurch wird die wirtschaftliche Nutzbarkeit der Windkraft ganz erheblich erschwert. Bei Windkraftanlagen besteht daher ein besonders großer Bedarf daran, ein Zurückbleiben der momentanen Energiegewinnung hinter dem momentanen Energiebedarf mit Energiespeichern abfangen zu können. Diesem Problem kann mit einem erfindungsgemäßen Energiespeicher sehr vorteilhaft begegnet werden, denn ein erfindungsgemäßer Energiespeicher ermöglicht nicht nur ein Abpuffern von Verbrauchsspitzen, sondern hier sehr vorteilhaft auch ein Überbrücken von Flauten. Der oder die erfindungsgemäßen Energiespeicher können ohne weiteres so dimensioniert werden, dass die Stromversorgung trotz Flaute und gleichzeitiger Verbrauchsspitze für eine vorgegebene Mindestzeit sichergestellt bleibt. Der wesentliche Nachteil von Windkraftanlagen, nämlich das Fehlen einer garantierten Mindestleistung, kann daher mittels der Erfindung entschärft bzw. weitgehend behoben werden.

Der weiteren eignet sich ein erfindungsgemäßer Energiespeicher sehr gut zur Realisierung eines Notstromaggregates bzw. zur Überbrückung von Stromnetz-Ausfällen.

Im folgenden werden zur weiteren Verdeutlichung der Vorteile der Erfindung einige näherungsweise berechnete Zahlenwerte angegeben, welche sich auf konkrete Auslegungsbeispiele eines erfindungsgemäßen Energiespeichers mit zylindrischem Speicherbehälter beziehen, wobei angenommen ist, dass als Flüssigkeit Wasser verwendet wird.

### Auslegungsbeispiel 1:

- Abmessungen des Speicherbehälters: Radius 1m, Höhe 10m
- eingefüllte Wassermenge: ca. 31,4 cbm (maximale Füllung)
- Drehzahl des Speicherbehälters: 2000 U/min
- maximaler Wasserdruck im Speicherbehälter: ca. 220 bar
- gespeicherte Energie: ca. 95 kWh

### Vergleich zur konventionellen Energiespeicherung:

Zur Speicherung derselben Energie als potentielle Energie in einem 200m über der Turbine gelegenen Wasserreservoir wäre eine Wassermenge von ca. 175.000 cbm erforderlich, d.h. eine ca. 5.500-mal größere Wassermenge als zur erfindungsgemäßen Energiespeicherung gemäß Auslegungsbeispiel 1.

### Auslegungsbeispiel 2:

- Abmessungen des Speicherbehälters: Radius 1 m, Höhe 10m
- eingefüllte Wassermenge: ca. 27,9 cbm (ca. 90% Füllung)
- Drehzahl des Speicherbehälters: 2130 U/min
- maximaler Wasserdruck im Speicherbehälter: ca. 221,2 bar
- gespeicherte Energie: ca. 128 kWh

### Vergleich zur konventionellen Energiespeicherung:

Zur Speicherung derselben Energie als potentielle Energie in einem 200m über der Turbine gelegenen Wasserreservoir wäre eine Wassermenge von ca. 235.000 cbm erforderlich, d.h. eine ca. 8.400-mal größere Wassermenge als zur erfindungsgemäßen Energiespeicherung gemäß Auslegungsbeispiel 2.

### Auslegungsbeispiel 3:

- Abmessungen des Speicherbehälters: Radius 1 m, Höhe 10m
- eingefüllte Wassermenge: ca. 15,7 cbm (ca. 50% Füllung)
- Drehzahl des Speicherbehälters: 2830 U/min
- maximaler Wasserdruck im Speicherbehälter: ca. 220 bar
- gespeicherte Energie: ca. 144 kWh

### Vergleich zur konventionellen Energiespeicherung:

Zur Speicherung derselben Energie als potentielle Energie in einem 200m über der Turbine gelegenen Wasserreservoir wäre eine Wassermenge von ca. 263.000 cbm erforderlich, d.h. eine ca. 16.800-mal größere Wassermenge als zur erfindungsgemäßen Energiespeicherung gemäß Auslegungsbeispiel 3.

### Auslegungsbeispiel 4:

- Abmessungen des Speicherbehälters: Radius 1,5 m, Höhe 10m
- eingefüllte Wassermenge: ca. 70,7 cbm (maximale Füllung)
- Drehzahl des Speicherbehälters: 2000 U/min
- maximaler Wasserdruck im Speicherbehälter: ca. 494 bar
- gespeicherte Energie: ca. 484 kWh

### Vergleich zur konventionellen Energiespeicherung:

Zur Speicherung derselben Energie als potentielle Energie in einem 200m über der Turbine gelegenen Wasserreservoir wäre eine Wassermenge von ca. 889.000 cbm erforderlich, d.h. eine ca. 12.500-mal größere Wassermenge als zur erfindungsgemäßen Energiespeicherung gemäß Auslegungsbeispiel 4.

### Auslegungsbeispiel 5:

- Abmessungen des Speicherbehälters: Radius 1,5 m, Höhe 10m
- eingefüllte Wassermenge: ca. 62,8 cbm (ca. 90% Füllung)
- Drehzahl des Speicherbehälters: 2130 U/min
- maximaler Wasserdruck im Speicherbehälter: ca. 498 bar
- gespeicherte Energie: ca. 649 kWh

### Vergleich zur konventionellen Energiespeicherung:

Zur Speicherung derselben Energie als potentielle Energie in einem 200m über der Turbine gelegenen Wasserreservoir wäre eine Wassermenge von ca. 1.2 Mio cbm erforderlich, d.h. eine ca. 18.900-mal größere Wassermenge als zur erfindungsgemäßen Energiespeicherung gemäß Auslegungsbeispiel 5.

### Auslegungsbeispiel 6:

- Abmessungen des Speicherbehälters: Radius 1,5 m, Höhe 10m
- eingefüllte Wassermenge: ca. 35,3 cbm (ca. 50% Füllung)
- Drehzahl des Speicherbehälters: 2830 U/min
- maximaler Wasserdruck im Speicherbehälter: ca. 495 bar
- gespeicherte Energie: ca. 727 kWh

### Vergleich zur konventionellen Energiespeicherung:

Zur Speicherung derselben Energie als potentielle Energie in einem 200m über der Turbine gelegenen Wasserreservoir wäre eine Wassermenge von ca. 1.3 Mio cbm erforderlich, d.h. eine ca. 37.700-mal größere Wassermenge als zur erfindungsgemäßen Energiespeicherung gemäß Auslegungsbeispiel 6.

Kurzbeschreibung der Zeichnung, in welcher schematisch veranschaulichen:
- Figur 1: eine Querschnittsansicht einer bevorzugten Ausführungsform eines erfindungsgemäßen Energiespeichers in einem Gehäuse mit Blickrichtung auf den Energiespeicher von der Seite, und
- Figur 2: eine Querschnittsansicht des Energiespeichers von Figur 1 mit Blickrichtung auf den Energiespeicher von oben, entsprechend dem Schnitt Q-Q von Figur 1, wobei Figur 2 gegenüber Figur 1 nicht maßstäblich ist,
- Figur 3: eine Querschnittsansicht einer weiteren Ausführungsform eines erfindungsgemäßen Energiespeichers, welche sich von der Ausführungsform der Figuren 1 und 2 dadurch unterscheidet, dass vier Auslassöffnungen zur Abgabe von Flüssigkeit vorhanden sind, mit Blickrichtung von oben, wobei Figur 3 dem Schnitt q-q von Figur 4 entspricht,
- Figur 4: den Energiespeicher von Figur 3 in Querschnittsansicht von der Seite, wobei Figur 4 gegenüber Figur 3 nicht maßstäblich ist,
- Figur 5: eine Detailausschnitt des Energiespeichers der Figuren 3 und 4 in Querschnittsansicht von oben, und
- Figuren 6 und 7: je eine Querschnittsansicht des jeweils teilweise mit Flüssigkeit gefüllten Speicherbehälters einer weiteren Ausführungsform eines erfindungsgemäßen Energiespeichers, mit Blickrichtung von der Seite, wobei die Figuren 6 und 7 gegenüber den Figuren 1 bis 5 nicht maßstäblich sind.

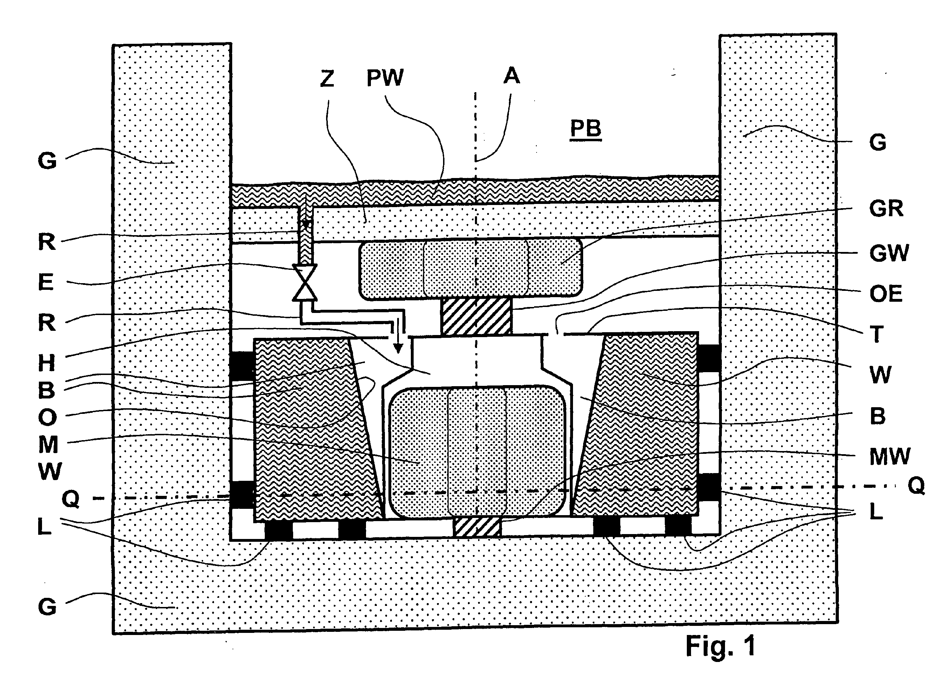

Der mechanische Energiespeicher von Figur 1 weist eine Trommel T von vorzugsweise zylindrischer äußerer Form auf, welche einen zentralen Hohlraum H sowie ein um diesen um 360° peripher umlaufendes Speicherbecken B umfasst. Die Trommel T ist mittels einer Mehrzahl von Lagern L um eine senkrechte Achse A rotierbar in einem Gehäuse G gelagert, welches nicht an der Rotation teilnimmt, sondern starr mit dem Erdboden verbunden ist. Vorzugsweise ist das Gehäuse G im Erdboden teilweise oder vollständig versenkt angeordnet. Das Gehäuse G besteht vorzugsweise aus massivem Beton, Stahlbeton oder Spannbeton. Die Lager L können zur Vermeidung von Reibungsverlusten als Magnetlager oder Luftlager ausgebildet sein. Gemäß einer nicht gezeigten Variante ruht der Speicherbehälter zumindest teilweise auf einem oder mehreren Luftkissen.

Im Inneren des zentralen Hohlraumes H befindet sich ein Elektromotor M, welcher starr mit der Trommel T verbunden ist. Die Achse der Welle MW des Elektromotors fluchtet mit der Rotationsachse A der Trommel T und ist starr mit dem Boden des Gehäuses G verbunden. Bei Anfahren des Elektromotors M stößt sich dieser somit über seine Welle MW an dem Gehäuse G ab und versetzt hierdurch die Trommel T in Rotation um die Achse A, wobei der Elektromotor M mit Ausnahme seiner Welle MW an der Rotation der Trommel T starr teilnimmt.

Über eine an der Oberseite der Trommel T umlaufende, z.B. ringförmig konzentrisch um die Rotationsachse verlaufende Einfüllöffnung OE kann Wasser W in den Speicherbehälter B eingefüllt werden, auch während dieser rotiert. Das eingefüllte Wasser W nimmt somit nach einer gewissen Relaxationszeit, welche vergeht, bis das sich die Rotationsbewegung gleichmäßig auf das gesamte eingefüllte Wasser W übertragen hat, ebenfalls an der Rotation der Trommel T teil.

Das eingefüllte Wasser W, die Trommel T und der Elektromotor M mit Ausnahme von dessen Motorwelle MW sind also jeweils Teil einer Schwungmasse. Diese dient erfindungsgemäß zur Speicherung von Rotationsenergie.

Durch Einfüllen von immer mehr Wasser W in den Speicherbehälter ist die Schwungsmasse vergrößerbar, bis ein bestimmter Maximalwert erreicht ist, welcher der maximal möglichen Füllmenge des Wassers W in dem Speicherbehälter B entspricht. Umgekehrt ist die Schwungmasse durch Entnahme von Wasser W aus dem Speicherbehälter B bis auf einen bestimmten Minimalwert verminderbar, welcher bei leerem Speicherbehälter B erreicht ist.

Mit Hilfe das Elektromotors M kann somit elektrische Energie im mechanische Energie, nämlich Rotationsenergie, umgewandelt und mittels der Schwungmasse gespeichert werden. Durch allmähliches Befüllen des Speicherbehälters B mit immer mehr Wasser W kann die gespeicherte Energie beliebig langsam vergrößert werden, so dass es genügt, wenn der Elektromotor M ein relativ leistungsschwacher Elektromotor ist. Hierdurch können die elektrischen und mechanischen Verluste des Elektromotors M vorteilhafterweise gering gehalten werden.

Vorzugsweise wird der Vorgang der Energiespeicherung geführt wie folgt: zunächst wird die Trommel T mit leerem Speicherbehälter B durch den Elektromotor M auf eine bestimmte Solldrehzahl beschleunigt, wobei hierfür wiederum eine relativ geringe Motorleistung ausreicht, da in dieser Phase die Masse und damit auch das Trägheitsmoment der Schwungmasse mangels Befüllung des Speicherbehälters B noch gering sind. Anschließend wird der Speicherbehälter B allmählich mit Wasser W befüllt, bis die maximale Füllmenge erreicht ist, wobei die Motordrehzahl z.B. durch eine Drehzahlregelung auf oder nahe dem Sollwert gehalten werden kann.

Figur 1 zeigt eine Situation, in welcher der Speicherbehälter B bereits weitgehend mit Wasser W gefüllt ist und sich in schneller Rotation befindet, so dass die Oberfläche O des Wassers W im Speicherbehälter B auf Grund der Zentrifugalkraft stark gegen die Waagrechte geneigt ist.

Oberhalb der Trommel T weise das Gehäuse G einen Zwischenboden Z auf, wobei der über dem Zwischenboden Z gelegene Teil des Innenraums des Gehäuses G einen wannenartigen, nicht an der Rotation der Schwungmasse teilnehmenden Pufferbehälter PB für Pufferwasser PW bildet. Vom Pufferbehälter PB führt eine Rohrleitung R über ein Einlassventil E zur umlaufenden Einfüllöffnung OE, so dass durch Öffnen des Einlassventils E ein Befüllen des Speicherbehälters B mit Pufferwasser PW und damit eine Vergrößerung der Schwungmasse erfolgen kann.

Umgekehrt ist gemäß einer bevorzugten Ausführungsform der Erfindung mit Hilfe einer nicht gezeigten Pumpe über eine ebenfalls nicht gezeigte Leitung Wasser W zur Verminderung der Schwungmasse aus dem Speicherbehälter B zurück in den Pufferbehälter PB förderbar. Dieser ist somit ein Zwischenspeicher für das Wasser, wobei solches sowohl aus dem Pufferbehälter PB in den Speicherbehälter B als auch umgekehrt einleitbar oder förderbar ist.

Das Volumen des Pufferbehälters PB ist vorzugsweise mindestens ebenso groß wie das Volumen des Speicherbehälters B. Auf diese Weise befindet sich das gesamte Wasser W, PW des erfindungsgemäßen Energiespeichers in einem Kreislauf, so dass der Energiespeicher, abgesehen von Verlusten durch Verdunstung, kein Wasser verbraucht und insbesondere keine Abwasserleitung nach außen und keine Wasserentsorgung vorgesehen zu werden braucht. Wasserverluste durch Verdunstung können durch eine oben geschlossene Ausführung des Pufferbehälters stark verringert oder ganz unterbunden werden; der Wasserkreislauf kann also zur Vermeidung von Wasserverlusten ein geschlossener Kreislauf sein.

Zur Rückgewinnung der gespeicherten Rotationsenergie dient vorzugsweise ein Generator GR, welcher starr mit dem Gehäuse G bzw. dem Zwischenboden Z verbunden ist und dessen Welle GW starr mit der Trommel T verbunden ist, oder umgekehrt. Hierbei fluchtet die Achse der Generatorwelle GW mit der Rotationsachse A der Trommel T. Bevorzugt ist die Generatorwelle GW von der Trommel T abkoppelbar, z.B. mittels einer Magnetkupplung. In diesem Fall kann nämlich die Generatorwelle GW zur Vermeidung von unnötiger Leerlauf-Verlustleistung im Generator GR so lange abgekoppelt bleiben, bis eine Energierückgewinnung gewünscht ist und der Generator GR in Aktion tritt.

Ebenso kann die Welle MW des Elektromotors M vom Gehäuse G z,B, mittels einer Magnetkupplung abkoppelbar sein, damit während der Energierückgewinnung keine Verlustleistung im Elektromotor M auftreten kann. Während der Energierückgewinnung wird der Elektromotor M vorzugsweise antriebslos geschaltet, d.h. von seiner Stromversorgung getrennt.

Gemäß der in Figur 1 schematisch veranschaulichten Ausführungsform der Erfindung sind alle Komponenten des Energiespeichers in dem Gehäuse G angeordnet.

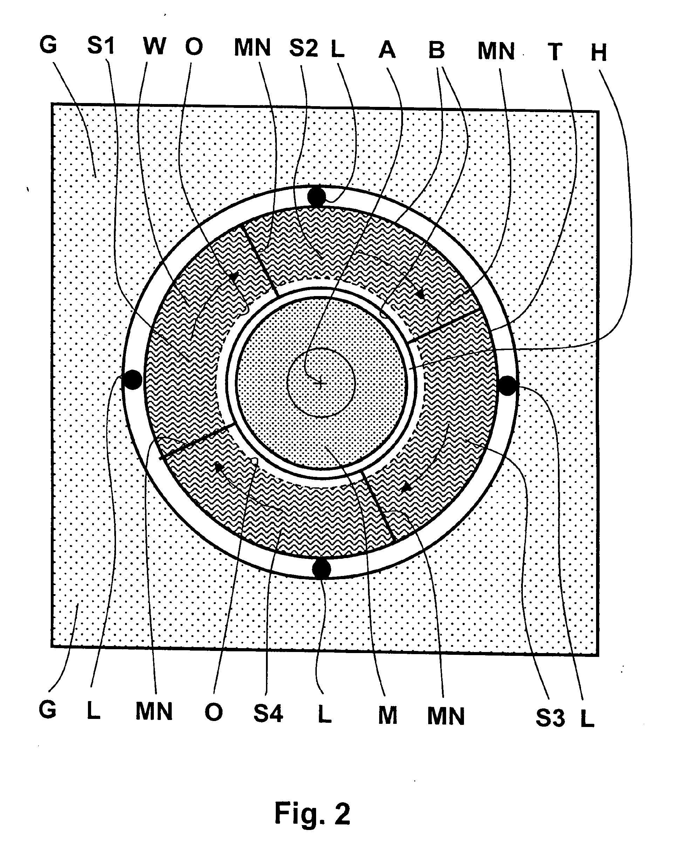

Figur 2 zeigt eine Querschnittsansicht des Energiespeichers von Figur 1 mit Blickrichtung auf den Energiespeicher von oben, wobei die Lage der Schnittebene in Figur 1 durch die strichpunktierte Linie Q-Q eingetragen ist. Der Generator G, der Zwischenboden Z und das Pufferwasser PW liegen oberhalb der Querschnittsebene und sind daher in Figur 2 nicht sichtbar. Aus Figur 2 ist ersichtlich, dass das Gehäuse G eine Aussparung von kreisförmigem Querschnitt enthält, in welcher die Trommel T angeordnet ist.

Zur Lagerung der Trommel diesen die Lager L.. Im Speicherbehälter B befindet sich Wasser W, welches durch die Zentrifugalkraft nach außen gedrängt wird, so dass die Wasseroberfläche O stark gegen die Waagerechte geneigt ist und auf Höhe der Schnittlinie Q-Q von Figur 1 den inneren Rand des Speicherbehälters nicht berührt.

Die Rotationsachse A steht senkrecht. Der Motor M befindet sich im zentralen Hohlraum H der Trommel T und ist peripher vom Speicherbehälter B umgeben.

Im Inneren des Speicherbehälters B befinden sich radial verlaufende Mitnehmer MN, welche den Drehimpulsübergang zwischen dem Speicherbehälter B und dem darin befindlichen Wasser W wesentlich verbessern und die innere Reibung und Wirbelbildung im Wasser W drastisch herabsetzen. Die Mitnehmer MN sind als radiale Trennwände ausgebildet, welche den Speicherbehälter in vier gleich große Segmente S1, S2, S3, S4 unterteilen, und weisen um Bereich ihrer unten äußeren Ecke je eine Aussparung oder einen Durchbruch auf, über welche die vier Segmente S1, S2, S3, S4 hydrostatisch miteinander kommunizieren, so dass der Füllstand des Wassers W in allen vier Segmenten S1, S2, S3, S4 jeweils gleich hoch ist bzw. sich gleich hoch einstellen kann.

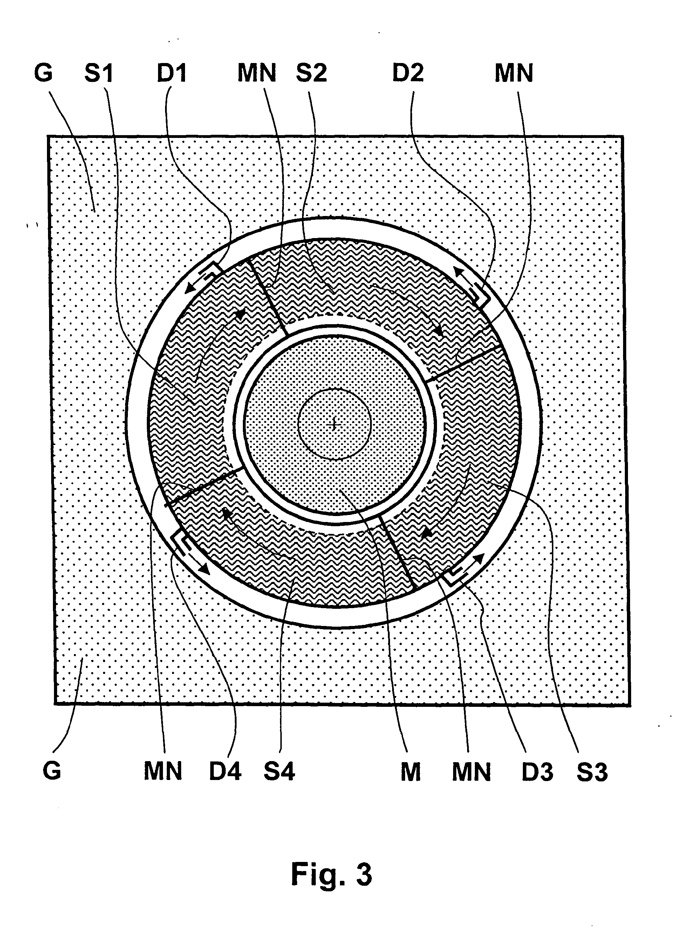

Die Figuren 3 bis 7 beziehen sich auf besonders vorteilhafte Ausführungsformen der Erfindung, welche eine Rückgewinnung von gespeicherter Energie ohne Verlangsamung der Drehzahl der Schwungmasse ermöglichen. Diese Ausführungsformen können daher sowohl bei Energiespeicherung als auch bei Energierückgewinnung unter ständig gleich bleibender Drehzahl der Schwungmasse betrieben werden und sind daher in der Praxis beispielsweise hinsichtlich der Ausgangsfrequenz eines von der Schwungmasse angetriebenen Drehstrom- oder Wechselstromgenerators und der Einspeisung der rückgewonnenen Energie in ein Stromnetz außerordentlich zweckmäßig. Diese Ausführungsformen erlauben eine Energierückgewinnung durch Verringerung der Schwungmasse, ohne Drehzahländerung.

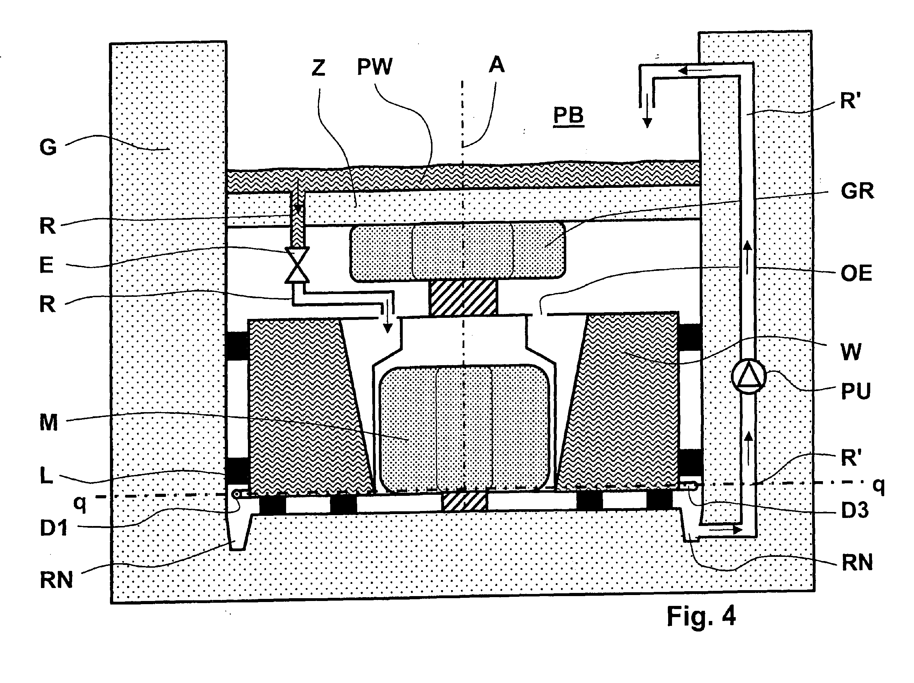

Figur 3 zeigt eine Querschnittsansicht einer weiteren Ausführungsform eines erfindungsgemäßen Energiespeichers, welche sich von der Ausführungsform der Figuren 1 und 2 nur dadurch unterscheidet, dass vier Auslassöffnungen zur Abgabe von Flüssigkeit vorhanden sind, mit Blickrichtung von oben, wobei Figur 3 dem Schnitt q-q von Figur 4 entspricht. Figur 4 veranschaulicht den Energiespeicher von Figur 3 in Querschnittsansicht von der Seite.

Die Rotationsrichtung des Speicherbehälters B ist in Figur 3 durch gekrümmte Pfeile dargestellt. Im Bereich seines Bodens weist der Speicherbehälter B vier jeweils paarweise achsensymmetrisch zur Rotationsachse A angeordnete Auslassöffnungen D1,D2,D3,D4 auf, welche an der Rotation des Speicherhälters starr teilnehmen und daher jeweils eine Bahngeschwindigkeit vB aufweisen, mit welcher sie die Rotationsachse A umlaufen. Jedem Segment S1,S2,D3,S4 ist genau eine der Auslassöffnungen D1,D2,D3,D4 zugeordnet. Die Auslassöffnungen D1,D2,D3,D4 sind fernbetätigt, z.B. über Funk, simultan öffenbar und verschließbar und stufenlos dosierbar.

Die Auslassöffnungen D1,D2,D3,D4 sind alle so orientiert, dass die austretende Flüssigkeit beim Durchströmen der Auslassöffnungen D1,D2,D3,D4 bezüglich derselben eine Strömungsrichtung aufweist, welche der Bahngeschwindigkeit vB der jeweiligen Auslassöffnung D1,D2,D3,D4 entgegengerichtet ist, so dass der Rückstoß der austretenden Flüssigkeit, ähnlich wie bei einem rotierenden Rasensprenger, die Rotation des Speicherbehälters B beschleunigt oder zu beschleunigen trachtet, d.h. zu beschleunigen versucht. Der Rückstoß erzeugt ein die Rotation unterstützendes Drehmoment. Die Rotation der Schwungmasse ist somit durch Entnehmen oder Ablassen von Flüssigkeit W über die Auslassöffnungen D1,D2,D3,D4 und die hierdurch bedingte Abgabe von Drehimpuls an die Schwungmasse beschleunigbar oder antreibbar oder zusätzlich (zum Antrieb M) antreibbar.

Die so gewonnene Rückstroßenergie kann vorteilhaft sofort vom Generator G in elektrische Energie umgewandelt werden, so dass die Drehzahl der Schwingmasse unverändert bleibt, die Masse der Schwungmasse jedoch abnimmt. Z.B. durch entsprechende Dosierung des über die Auslassöffnungen D1,D2,D3,D4 austretenden Flüssigkeitsstroms ist die dem Energiespeicher bei konstanter Drehzahl entnehmbare Leistung je nach Bedarf dosierbar.

Durch Schließen der Auslassöffnungen D1,D2,D3,D4, erneutes Zuführen von Flüssigkeit in den Speicherbehälter B und Inbetriebnahme des Motors M kann jederzeit, ebenfalls ohne Drehzahländerung, von Energierückgewinnung wieder auf Energiespeicherung umgeschaltet werden. Zwischen Energieaufnahme und Energieabgabe kann daher beliebig hin- und hergeschaltet werden.

Die Ausströmgeschwindigkeit der durch die Auslassöffnungen D1,D2,D3,D4 austretenden Flüssigkeit hängt von der Drehzahl des Speicherbehälters B, vom Füllstand im Speicherbehälter B und vom Abstand der Auslassöffnungen D1,D2,D3,D4 von der Rotationsachse A ab.

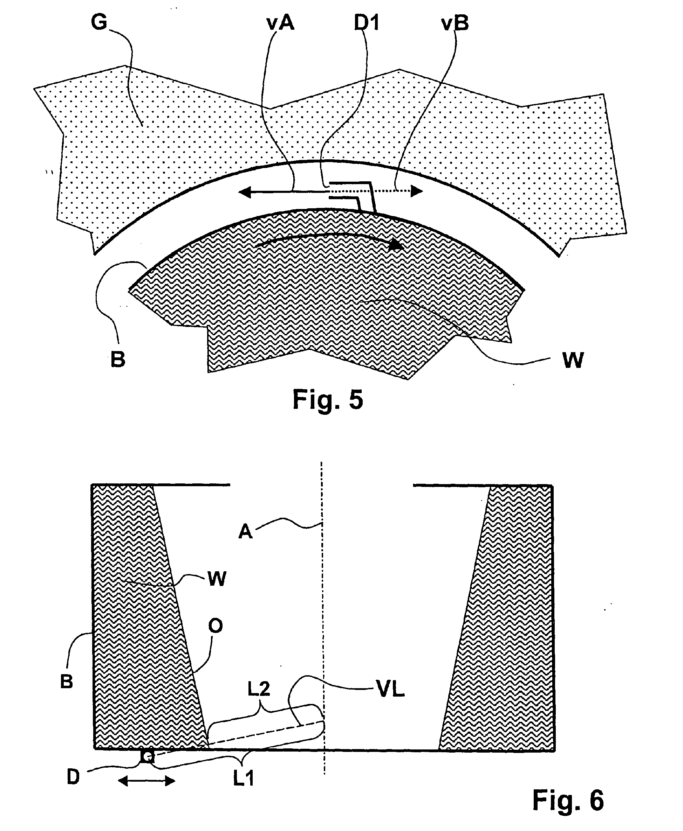

Um einen möglichst hohen Wirkungsgrad des Energiespeichers zu erreichen, wird angestrebt, dass die Ausströmgeschwindigkeit vA der Flüssigkeit (bezogen auf die jeweilige Auslassöffnung) der Bahngeschwindigkeit vB entgegengesetzt gleich ist, wie in Figur 5 dargestellt, welche einen Detailausschnitt des Energiespeichers der Figuren 3 und 4 mit der willkürlich als Beispiel gewählten Auslassöffnung D1 in Querschnittsansicht von oben zeigt

Die Rotationsrichtung des Speicherbehälters B ist in Figur 5 durch einen gebogenen Pfeil dargestelt. Die Bahngeschwindigkeit vB der Auslassöffnung ist durch einen punktierten Pfeil dargestellt. Die auf die Auslassöffnung bezogene Ausströmgeschwindigkeit vA, in Figur 5 dargestellt durch einen nach links weisenden Pfeil, ist der Bahngeschwindigkeit vB entgegengesetzt gleich. Für einen außenstehenden, ruhenden Beobachter tritt die Flüssigkeit daher in dem hier dargestellten Idealfall ruhend aus der sich bewegenden Auslassöffnung D1 aus.

Um zu erreichen, dass die Ausströmgeschwindigkeit vA (bezogen auf die jeweilige Auslassöffnung) der Bahngeschwindigkeit vB so weit wie möglich entgegengesetzt gleich ist, ist gemäß einer besonders vorteilhaften und daher bevorzugten Variante vorgesehen, dass die Auslassöffnungen D1,D2,D3,D4 über einen nicht gezeigten Verstellmechanismus radial verstellbar sind. Bevorzugt ist daher der Abstand der Auslassöffnungen D1,D2,D3,D4 von der Rotationsachse A mittels einer Verstelleinrichtung so einstellbar, dass die austretende Flüssigkeit beim Durchströmen der Auslassöffnungen D1,D2,D3,D4 bezüglich der jeweiligen Austrittsöffnung eine Ausströmgeschwindigkeit vA aufweist, deren Betrag vom Betrag der Bahngeschwindigkeit vB der Auslassöffnungen D1,D2,D3,D4 möglichst wenig, beispielsweise um höchstens 30%, bevorzugt um höchstens 10%, abweicht, wobei die Strömungsrichtung des austretenden Wassers, bezogen auf die jeweilige Auslassöffnung, der Bahngeschwindigkeit entgegengerichtet ist.

Bevorzugt ist die Verstelleinrichtung hierbei imstande, die gewünschte Bedingung, dass Ausströmgeschwindigkeit vA der Bahngeschwindigkeit vB entgegengesetzt gleich sein soll, automatisch herzustellen, und hierbei den Einfluss von Änderungen des Füllstands im Speicherbehälter B und von Änderungen der Drehzahl des Speicherbehälters auszugleichen, d.h. den Abstand der Auslassöffnungen D1,D2,D3,D4 diesen Einflüssen nachzuführen. Zur Realisierung einer solchen Nachführung kann z.B. die Ausströmgeschwindigkeit als Funktion der Drehzahl, des Füllstandes und des Abstandes der Auslassöffnung von der Rotationsachse durch Kalibrierungsmessungen und/oder Berechnungen ermittelt und anschließend als Steuergröße auf die Verstelleinrichtung aufgegeben werden, wobei der Füllstand und die Drehzahl fortlaufend gemessen werden und der Abstand der Auslassöffnung von der Rotationsachse entsprechend eingestellt wird.

In Figur 4 ist schematisch gezeigt, dass die abgelassene Flüssigkeit in einer ringsum im Boden des Gehäuses G umlaufenden Sammelrinne RN aufgefangen werden und über eine Rücklaufleitung R' und eine Pumpe PU wieder in das Pufferbecken PB gelangen kann, also dem Flüssigkeitskreislauf nicht entzogen wird.

Figur 6 zeigt den Speicherbehälter B der Figuren 1 bis 5 in Querschnittsdarstellung von der Seite mit einer Auslassöffnung D, welche unterhalb des Bodens des Speicherbehälters B angeordnet ist, und veranschaulicht eine bevorzugte Position der Auslassöffnung D bezüglich der Oberfläche O der Flüssigkeit W und der Rotationsachse A. Die Flüssigkeitsoberfläche ist auf Grund des Zusammenwirkens von Schwerkraft und Zentrifugalkraft geneigt, wobei die sich einstellende Krümmung der Oberfläche O ebenso wie in den Figuren 1 und 4 nicht dargestellt ist.

Gemäß der bevorzugten Ausführungsform von Figur 6 ist die Position der Auslassöffnung D so gewählt bzw. eingestellt, dass eine Verbindungslinie VL von der Mitte der Auslassöffnung D zur Rotationsachse A, welche die Oberfläche O senkrecht schneidet, insgesamt um einen Faktor X länger ist als derjenige Teil dieser Verbindungslinie VL, welcher von der Rotationsachse A bis zur Oberfläche O reicht, wobei der Faktor X eine Zahl zwischen 1,3 und 1,55, bevorzugt zwischen 1,40 und 1,45 ist. Besonders bevorzugt ist die Zahl X gleich der Quadratwurzel aus 2. Die Verbindungslinie VL besitzt die Länge L1. Derjenige Teil dieser Verbindungslinie VL, welcher von der Rotationsachse A bis zur Oberfläche O reicht, besitzt die Länge L2. Damit ergibt sich L1 = L2 * X.

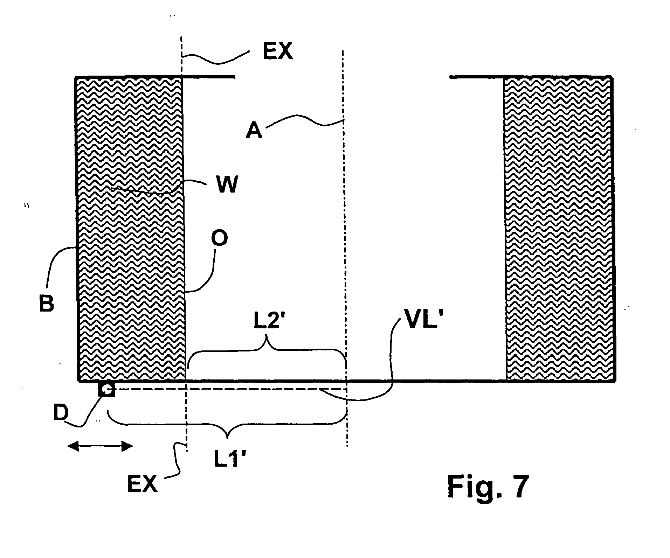

Figur 7 zeigt den Speicherbehälter B der Figuren 1 bis 5 in Querschnittsdarstellung von der Seite mit der Auslassöffnung D, welche hier ebenfalls unterhalb des Bodens des Speicherbehälters B angeordnet ist, und veranschaulicht eine weitere bevorzugte Position der Auslassöffnung D bezüglich der Oberfläche O der Flüssigkeit W und der Rotationsachse A. Die Drehzahl des Speicherbehälters sei hier so hoch angenommen, dass die Schwerkraft gegenüber der Zentrifugalkraft vernachlässigbar ist und die Flüssigkeitsoberfläche senkrecht steht.

Eine Verbindungslinie von der Auslassöffnung D zur Rotationsachse A kann daher die nicht die Oberfläche O selbst, jedoch deren Extrapolation E außerhalb des Speicherbehälter B senkrecht schneiden. Gemäß der bevorzugten Ausführungsform von Figur 7 ist die Position der Auslassöffnung D so gewählt bzw. eingestellt, dass eine Verbindungslinie VL' von der Mitte der Auslassöffnung D zur Rotationsachse A, welche die Extrapolation E der Oberfläche O außerhalb des Speicherbehälter B senkrecht schneidet, insgesamt um einen Faktor X länger ist als derjenige Teil dieser Verbindungslinie VL', welcher von der Rotationsachse A bis zur Extrapolation E der Oberfläche O reicht, wobei der Faktor X und seine bevorzugten werte bereits unter Bezug auf Figur 6 erläutert wurden. Die Verbindungslinie VL' besitzt die Länge L1'. Derjenige Teil dieser Verbindungslinie VL', welcher von der Rotationsachse A bis zur Extrapolation E der Oberfläche O reicht, besitzt die Länge L2'. Damit ergibt sich L1' = L2' * X. Die Extrapolation E ist die imaginär nach außerhalb des Speicherbehälters B fortgesetzte Oberfläche O, deren parabolische Krümmung vorliegend vernachlässigt wurde und nicht dargestellt ist.

Eine weitere sehr vorteilhafte Anwendungsmöglichkeit eines erfindungsgemäßen Energiespeichers besteht darin, Energieverluste in Kraftwerken, besonders in Großkraftwerken, zu verringern. In Kraftwerken kommen nämlich zur Stromerzeugung sehr große Generatoren zum Einsatz, welche hier zur Unterscheidung vom Generator GR (Figuren 1 und 4) als "Netzgeneratoren" bezeichnet werden. Derartige Netzgeneratoren können Durchmesser von mehreren Metern aufweisen und werden typischerweise z.B. mit Drehzahlen von 6000 U/min betrieben. In Netzgeneratoren ist daher im Betrieb ein ganz erheblicher Energiebetrag in Form von Rotationsenergie gespeichert.

Zu Wartungs- und Reparaturzwecken müssen die Netzgeneratoren immer wieder vom Netz getrennt und angehalten werden. Eine Abbremsung des Netzgenerators durch direkte Einspeisung seiner Rotationsenergie in das Stromnetz ist auf Grund von einzuhaltenden Frequenzbedingungen aber nicht möglich. Herkömmlicherweise geht also nicht nur beim Anhalten des Netzgenerators dessen Rotationsenergie ungenutzt verloren, sondern des weiteren muss zur Vermeidung von Zeitverlust auch eine aufwändige, mit großem Materialverschleiß und Hitzeentwicklung einhergehende und daher teure Abbremsung des Netzgenerators bis zum Stillstand durchgeführt werden. Für derartige Abbremsungen müssen in Kraftwerken spezielle Bremsanlagen vorgehalten werden.

Mit Hilfe der Erfindung ist es möglich, alle diese Probleme sehr weitgehend zu entschärfen und trotzdem die Frequenzbedingungen bei der Einspeisung zu erfüllen. Dies wird dadurch ermöglicht, dass mit Hilfe der Erfindung eine Einspeisung von Energie in das Stromnetz bei immer derselben Drehzahl eines Generators erfolgt.

Hierzu wird ein erfindungsgemäßer Energiespeicher mit einem Generator GR versehen, z.B. wie oben in den Figuren 1 und 4 dargestellt. Des weiteren wird ein schaltbares Stufengetriebe verwendet, über welches die Welle des Generators GR der Welle des Netzgenerators koppelbar ist. Erfindungsgemäß wird nun vorgegangen wie folgt:

### Vorbereitungsschritt:

Abkoppeln des Netzgenerators von seinem Antriebsaggregat (z.B. Dampfturbine) und vom Stromnetz.
- Beispiel: Der Netzgenerator rotiert nun frei mit einer Drehzahl N1 von z.B. 6000 U/min.

### 1. Stufe Schritt a):

Der vorzugsweise leere, jedenfalls nicht vollständig befüllte Speicherbehälter B des erfindungsgemäßen Energiespeichers wird bei vom Stromnetz elektrisch abgekoppeltem Generator GR mittels des Antriebs M auf eine Drehzahl B1 gebracht, welche sich von N1 um einen Faktor X1 unterscheidet, wobei X1 das Übersetzungsverhältnis des Stufengetriebes in einer ersten Schaltstufe S1 ist: N1 = X1*B1 oder B1 = N1/X1.
- Beispiel: gewählter Übersetzungsverhältnis X1=2:1=2, so dass B1= N1/2. Bei N1=6000 U/min ergibt sich nun B1 zu 3000 U/min.

### 1. Stufe Schritt b):

Die Wellen des Netzgenerators und des Generators GR werden nun über das Stufengetriebe gekoppelt. Da B1=N1/X1 gewählt wurde, ist dies näherungsweise ruckfrei möglich.
- Im vorliegenden Beispiel rotiert nun der Generator GR mit 3000 U/min und ist über das Schaltgetriebe mit einem Übersetzungsverhältnis von 2:1 mit dem Netzgenerator verbunden, welcher mit 6000 U/min rotiert.

### 1. Stufe Schritt c):

In den Speicherbehälter wird nun Flüssigkeit eingefüllt. Hierdurch nimmt das Trägheitsmoment desselben zu, wodurch seine Drehzahl auf einen Wert B2 sinkt und Rotationsenergie vom Netzgenerator auf die Schwungmasse übertragen wird. Gleichzeitig sinkt die Drehzahl des Netzgenerators von N1 auf einen Wert N2=N1*(B2/B1), da wegen der Kopplung der Wellen N2/N1=B2/B1 gelten muss.
- Im vorliegenden Beispiel kann z.B. B2=2700 U/min und N2=5400 U/min sein, so dass in diesem Beispiel die Drehzahl des Netzgenerators um 10% gesenkt wurde.

### 1. Stufe Schritt d):

Die Wellen des Netzgenerators und des Generators GR werden voneinander abgekoppelt.

### 1. Stufe Schritt e):

Durch Ablassen von Flüssigkeit über die Auslassöffnung (oder die Auslassöffnungen) wird in der oben beschriebenen Weise ein Drehmoment auf den Speicherbehälter B erzeugt, welches die Rotation desselben beschleunigt, bis die Drehzahl des Speicherbehälters B wieder den Wert B1 erreicht hat.
- Im vorliegenden Beispiel rotiert der Speicherbehälter B nun wieder mit 3000 U/min.

### 1. Stufe Schritt f):

Der Generator GR wird elektrisch an das Stromnetz (oder ein anderes Stromnetz) angekoppelt.

### 1. Stufe Schritt g):

Durch weiteres Ablassen von Flüssigkeit über die Auslassöffnung (oder die Auslassöffnungen) wird in der oben beschriebenen Weise ein Drehmoment auf den Speicherbehälter B erzeugt, welches die Rotation desselben zu beschleunigen versucht, und die hierdurch zurückgewonnene Energie ohne Änderung der Drehzahl des Speicherbehälters vom Generator GR sofort in elektrische Energie umgewandelt und in das Stromnetz eingespeist. Vorzugsweise wird dieser Prozess so lange aufrecht erhalten, bis der Speicherbehälter B leer ist. Nach Ende dieses Schritts rotiert der Speicherbehälter immer noch mit der Drehzahl B1.
- Im vorliegenden Beispiel rotiert der Speicherbehälter B während der Einspeisung ständig mit 3000 U/min.

### 1. Stufe Schritt h):

Der Generator GR wird elektrisch vom Stromnetz abgekoppelt.

Hiermit ist die 1. Stufe beendet. Nach Durchführung der 1. Stufe ist der Netzgenerator bereits zum Teil abgebremst und ein großer Teil seiner Rotationsenergie ins Netz eingespeist worden. Die Abbremsung des Netzgenerators und die Rückgewinnung von Energie aus demselben kann nun in einer 2. Stufe fortgesetzt werden:

### 2. Stufe Schritt a):

Das Stufengetriebe wird nun auf ein Übersetzungsverhältnis von X2=N2/B1 umgeschaltet.
- Im vorliegenden Beispiel ist N2=5400 U/min, B1=3000 U/min, so dass X2=27:15=1,8.

### 2. Stufe Schritt b):

Die Wellen des Netzgenerators und des Generators GR werden nun wieder über das Stufengetriebe gekoppelt. Da X2=N2/B1 gewählt wurde, ist dies näherungsweise ruckfrei möglich.

### 2. Stufe Schritt c):

In den Speicherbehälter wird nun wieder Flüssigkeit eingefüllt. Hierdurch nimmt das Trägheitsmoment desselben zu, wodurch seine Drehzahl von B1 auf einen Wert B3 sinkt und Rotationsenergie vom Netzgenerator auf die Schwungmasse übertragen wird. Gleichzeitig sinkt die Drehzahl des Netzgenerators von N2 auf einen Wert N3=N2*(B3/B1), da wegen der Kopplung der Wellen N3/N3=B3/B1 gelten muss.
- Im vorliegenden Beispiel kann z.B. B3=2600 U/min und N3=4680 U/min sein, so dass in diesem Beispiel die Drehzahl des Netzgenerators um weitere ca. 13% gesenkt wurde.

### 2. Stufe Schritt d):

Die Wellen des Netzgenerators und des Generators GR werden voneinander abgekoppelt.

### 2. Stufe Schritte e):

Durch Ablassen von Flüssigkeit über die Auslassöffnung (oder die Auslassöffnungen) wird in der oben beschriebenen Weise ein Drehmoment auf den Speicherbehälter B erzeugt, welches die Rotation desselben beschleunigt, bis die Drehzahl des Speicherbehälters B wieder den Wert B1 erreicht hat.
- Im vorliegenden Beispiel rotiert der Speicherbehälter B nun wieder mit 3000 U/min.

### 2. Stufe Schritt f):

Der Generator GR wird elektrisch an das Stromnetz (oder ein anderes Stromnetz) angekoppelt.

### 2. Stufe Schritt g):

Durch weiteres Ablassen von Flüssigkeit über die Auslassöffnung (oder die Auslassöffnungen) wird in der oben beschriebenen Weise ein Drehmoment auf den Speicherbehälter B erzeugt, welches die Rotation desselben zu beschleunigen versucht, und die hierdurch zurückgewonnene Energie ohne Änderung der Drehzahl des Speicherbehälters vom Generator GR sofort in elektrische Energie umgewandelt und in das Stromnetz eingespeist. Vorzugsweise wird dieser Prozess so lange aufrecht erhalten, bis der Speicherbehälter B leer ist. Nach Ende dieses Schritts rotiert der Speicherbehälter immer noch mit der Drehzahl B1.
- Im vorliegenden Beispiel rotiert der Speicherbehälter B während der Einspeisung wiederum ständig mit 3000 U/min.

### 2. Stufe Schritt h):

Der Generator GR wird elektrisch vom Stromnetz abgekoppelt.

Hiermit ist die 2. Stufe beendet. Nach Durchführung der 2. Stufe ist der Netzgenerator weitere abgebremst und ein weiterer großer Teil seiner Rotationsenergie ins Netz eingespeist worden.

In einer oder mehreren weiteren Stufen kann dieses Verfahren völlig entsprechend mit jeweils entsprechenden Getriebeübersetzungen wiederholt werden, wobei jedes Mal der Netzgenerator weiter abgebremst und jedes Mal ein weiterer Teil seiner Rotationsenergie zur Einspeisung genutzt wird.

### Gewerbliche Anwendbarkeit:

Die Erfindung ist gewerblich anwendbar z.B. im Bereich der Kraftwerks- und Energietechnik.

### Liste der Bezugszeichen:

- A: Rotationsachse
- B: Speicherbehälter
- D,D1-D4: Auslassöffnungen
- E: Einlassventil
- EX: Extrapolation von O nach außerhalb von B
- G: Gehäuse
- GR: Generator
- GW: Generatorwelle
- H: zentraler Hohlraum
- L: Lager
- L1,L1': Länge von VL,VL'
- L2,L2': Teil von L1,L1'
- M: Motor
- MN: Mitnehmer
- MW: Motorwelle
- O: Oberfläche von W
- OE: umlaufende Einfüllöffnung
- PB: Pufferbecken
- PW: Pufferwasser in PB
- Q-Q: Schnittlinie in Figur 1
- q-q: Schnittlinie in Figur 4
- R: Rohrleitung
- S1-S4: Segmente von B
- T: Trommel
- VL,VL': Verbindungslinien
- W: Wasser in B
- Z: Zwischenboden

## Patentansprüche

1. Mechanischer Energiespeicher mit einer rotierbar gelagerten, zur Speicherung von Rotationsenergie dienenden Schwungmasse und mit einem Antrieb, insbesondere Motor, **dadurch gekennzeichnet,**
**dass** der Energiespeicher einen Speicherbehälter (B) aufweist, welcher
- Teil der Schwungmasse ist und mittels des Antriebs (M) in Rotation um eine Rotationsachse (A) versetzbar ist,
- und in welchen Flüssigkeit (W), z.B. Wasser oder Quecksilber, einfüllbar ist, so dass
- die eingefüllte Flüssigkeit (W) an der Rotation des Speicherbehälters (B) teilnimmt und somit ebenfalls Teil der Schwungmasse ist
- und diese durch Einfüllen von Flüssigkeit (W) in den Speicherbehälter (B) vergrößerbar und durch Entnahme von Flüssigkeit (W) aus dem Speicherbehälter (B) verminderbar ist.

2. Mechanischer Energiespeicher nach Anspruch 1, **dadurch gekennzeichnet, dass** der Antrieb (M) ein Elektromotor (M) ist, so dass der Energiespeicher imstande ist, elektrische Energie in Rotationsenergie umzuwandeln und diese mittels der Schwungmasse (B,W) zu speichern.

3. Mechanischer Energiespeicher nach einem der vorigen Ansprüche, **gekennzeichnet durch**
einen Generator (GR), welcher mit der Schwungmasse (B,W) gekoppelt oder koppelbar ist und welcher imstande ist, wenigstens einen Teil der Rotationsenergie der Schwungmasse in elektrische Energie umzuwandeln.

4. Mechanischer Energiespeicher nach einem der vorigen Ansprüche, **dadurch gekennzeichnet,**
**dass** der Speicherbehälter (B) wenigstens eine an der Rotation desselben teilnehmende und daher die Rotationsachse (A) mit einer bestimmten Bahngeschwindigkeit (vB) umlaufende Auslassöffnung (D,D1,D2,D3,D4) aufweist, über welche aus dem Speicherbehälter (B) Flüssigkeit (W) so entnehmbar oder ablassbar ist, dass ein auf den Speicherbehälter (B) oder die Schwungmasse wirkendes Drehmoment entsteht, welches die Rotation des Speicherbehälters (B) zu beschleunigen imstande ist oder zu beschleunigen versucht.

5. Mechanischer Energiespeicher nach Anspruch 4, **dadurch gekennzeichnet, dass**
- die Auslassöffnung (D,D1,D2,D3,D4) fernbetätigt öffenbar und verschließbar ist,
- oder der über die Auslassöffnung (D,D1,D2,D3,D4) abgegebene Flüssigkeitsstrom mittels einer Stellvorrichtung fernbetätigt zwischen dem Wert Null und einem Höchstwert dosierbar ist.

6. Mechanischer Energiespeicher nach Anspruch 4 oder 5, **dadurch gekennzeichnet, dass** die Auslassöffnung so angeordnet ist, dass die durch dieselbe aus dem Speicherbehälter (B) austretende Flüssigkeit beim Durchströmen der Auslassöffnung
- senkrecht nach unten gerichtet ist oder
- eine nach unten gerichtete Geschwindigkeitskomponente aufweist.

7. Mechanischer Energiespeicher nach einem der Ansprüche 4 oder 5, **dadurch gekennzeichnet,**
**dass** die Auslassöffnung (D,D1,D2,D3,D4) so orientiert ist, dass die austretende Flüssigkeit beim Durchströmen der Auslassöffnung (D,D1,D2,D3,D4) bezüglich derselben eine Strömungsrichtung aufweist, welche
- der Bahngeschwindigkeit (vB) der Auslassöffnung (D,D1,D2,D3,D4) entgegengerichtet ist
- oder eine der Bahngeschwindigkeit (vB) der Auslassöffnung (D,D1,D2,D3,D4) entgegengerichtete Komponente aufweist,
so dass der Rückstoß der austretenden Flüssigkeit ein Drehmoment auf den Speicherbehälter (B) ausübt, welches die Rotation des Speicherbehälters (B) zu beschleunigen imstande ist oder zu beschleunigen versucht.

8. Mechanischer Energiespeicher nach Anspruch 7, **dadurch gekennzeichnet,**
**dass** der Abstand der Auslassöffnung (D,D1,D2,D3,D4) von der Rotationsachse (A) so gewählt oder mittels einer Verstelleinrichtung so einstellbar ist, dass die austretende Flüssigkeit beim Durchströmen der Auslassöffnung (D,D1,D2,D3,D4) bezüglich derselben eine Ausströmgeschwindigkeit (vA) aufweist, deren Betrag vom Betrag der Bahngeschwindigkeit (vB) der Auslassöffnung (D,D1,D2,D3,D4) um höchstens 30%, bevorzugt um höchstens 10%, abweicht.

9. Mechanischer Energiespeicher nach Anspruch 8, **dadurch gekennzeichnet, dass** die Verstellvorrichtung
- imstande ist, den Abstand der Auslassöffnung (D,D1,D2,D3,D4) von der Rotationsachse (A) bei sich veränderndem Befüllungsgrad des Speicherbehälters (B) automatisch so nachzustellen,
- oder imstande ist, den Abstand der Auslassöffnung (D,D1,D2,D3,D4) von der Rotationsachse (A) bei sich verändernder Drehzahl des Speicherbehälters (B) automatisch so nachzustellen,
- oder imstande ist, den Abstand der Auslassöffnung (D,D1,D2,D3,D4) von der Rotationsachse (A) bei sich veränderndem Befüllungsgrad und sich gleichzeitig verändernder Drehzahl des Speicherbehälters (B) automatisch so nachzustellen,
dass die relative Abweichung
- zwischen dem Betrag der auf die Auslassöffnung (D,D1,D2,D3,D4) bezogenen Ausströmgeschwindigkeit (vA)
- und dem Betrag der Bahngeschwindigkeit (vB)
unter 30%, bevorzugt unter 10%, bleibt.

10. Mechanischer Energiespeicher nach einem der Ansprüche 4 bis 9, **dadurch gekennzeichnet,**
**dass** der Auslassöffnung (D,D1,D2,D3,D4) eine Beeinflussungseinrichtung, insbesondere Druckverminderer, vorgeschaltet ist, welche imstande ist, die Ausströmgeschwindigkeit (vA), mit welcher die ausströmende Flüssigkeit die Auslassöffnung (D,D1,D2,D3,D4) durchströmt, zu verändern, zu begrenzen oder auf einen bestimmten Wert einzustellen.

11. Mechanischer Energiespeicher nach Anspruch 7 und 10, **dadurch gekennzeichnet,**
**dass** die Ausströmgeschwindigkeit der durch die Auslassöffnung (D,D1,D2,D3,D4) austretenden Flüssigkeit mittels der Beeinflussungseinrichtung so einstellbar ist, dass die austretende Flüssigkeit beim Durchströmen der Auslassöffnung (D,D1,D2,D3,D4) bezüglich derselben eine Ausströmgeschwindigkeit (vA) aufweist, deren Betrag vom Betrag der Bahngeschwindigkeit (vB) der Auslassöffnung (D,D1,D2,D3,D4) um höchstens 30%, bevorzugt um höchstens 10%, abweicht.

12. Mechanischer Energiespeicher nach Anspruch 11, **dadurch gekennzeichnet,**
**dass** die Beeinflussungseinrichtung
- imstande ist, die Ausströmgeschwindigkeit bei sich veränderndem Befüllungsgrad des Speicherbehälters (B) automatisch so nachzustellen,
- oder imstande ist, die Ausströmgeschwindigkeit bei sich verändernder Drehzahl des Speicherbehälters (B) automatisch so nachzustellen,
- oder imstande ist, die Ausströmgeschwindigkeit bei sich veränderndem Befüllungsgrad und sich gleichzeitig ändernder Drehzahl des Speicherbehälters (B) automatisch so nachzustellen,
**dass** die relative Abweichung
- zwischen dem Betrag der auf die Auslassöffnung (D,D1,D2,D3,D4) bezogenen Ausströmgeschwindigkeit (vA)
- und dem Betrag der Bahngeschwindigkeit (vB)
unter 30%, bevorzugt unter 10%, bleibt.

13. Mechanischer Energiespeicher nach einem der Ansprüche 4 bis 12, **dadurch gekennzeichnet,**
**dass** diejenige Verbindungslinie (VL,VL') von der Mitte der Auslassöffnung (D) zur Rotationsachse (A), welche
- zur Oberfläche (O) der Flüssigkeit (W)
- oder zur Extrapolation (EX) der Oberfläche (O) nach außerhalb des Speicherbehälters (B)
senkrecht steht, um einen Faktor X länger ist als derjenige Teil dieser Verbindungslinie (VL,VL'), welcher von der Rotationsachse (A)
- bis zur Oberfläche (O)
- oder bis zur Extrapolation (EX) der Oberfläche (O)
reicht, wobei der Faktor X eine Zahl zwischen 1,3 und 1,55, bevorzugt zwischen 1,40 und 1,45 ist.

14. Mechanischer Energiespeicher nach einem der Ansprüche 4 bis 13, **dadurch gekennzeichnet, dass** der Durchmesser oder die Größe der Auslassöffnung (D,D1,D2,D3,D4) fernbetätigt veränderbar ist.

15. Mechanischer Energiespeicher nach einem der vorigen Ansprüche, **gekennzeichnet durch**
eine Kraftmaschine, insbesondere Turbine oder Hydraulikmotor, welcher Flüssigkeit (W) aus dem rotierenden Speicherbehälter (B) so zuführbar ist, dass die der Kraftmaschine zugeführte Flüssigkeit die Kraftmaschine unter Abgabe von kinetischer Energie antreibt und die Kraftmaschine auf diese Weise imstande ist, wenigstens einen Teil der Rotationsenergie der Schwungmasse in elektrische Energie umzuwandeln.

16. Mechanischer Energiespeicher nach einem der vorigen Ansprüche, **dadurch gekennzeichnet, dass** der Antrieb (M)
- imstande ist, unabhängig vom Füllstand der Flüssigkeit (W) im Speicherbehälter (B) die Drehzahl des Speicherbehälters (B) konstant zu halten,
- oder mit einer Regelungseinheit verbunden ist, mittels welcher er imstande ist, unabhängig vom Füllstand der Flüssigkeit (W) im Speicherbehälter (B) die Drehzahl des Speicherbehälters (B) auf einen vorgebbaren Sollwert einzuregeln.

17. Mechanischer Energiespeicher nach einem der vorigen Ansprüche, **dadurch gekennzeichnet,**
**dass** der Speicherhälter (B) einen zentralen, gegen die Flüssigkeit (W) abgedichteten Hohlraum (H) aufweist.

18. Mechanischer Energiespeicher nach einem der vorigen Ansprüche, **gekennzeichnet durch**
einen Pufferbehälter (PB), welcher nicht an der Rotation des Speicherbehälters (B) teilnimmt und als Zwischenspeicher für die Flüssigkeit dient, wobei Flüssigkeit aus dem Pufferbehälter (PB) in den Speicherbehälter (B) einleitbar oder förderbar ist und Flüssigkeit, welche aus dem Speicherbehälter ausgetreten ist oder entnommen wurde, in den Pufferbehälter (PB) einleitbar oder förderbar ist.

19. Mechanischer Energiespeicher nach einem der vorigen Ansprüche, **dadurch gekennzeichnet, dass** der Speicherbehälter (B) in einem nicht an der Rotation des Speicherbehälters (B) teilnehmenden Gehäuse (G) rotierbar gelagert ist.

20. Mechanischer Energiespeicher nach Anspruch 18 und 19, **dadurch gekennzeichnet,**
**dass** das Gehäuse (G) einen Zwischenboden (Z) aufweist, wobei der oberhalb des Zwischenbodens (Z) gelegene Teil des Innenraums des Gehäuses (G) den Pufferbehälter (PB) bildet.

21. Mechanischer Energiespeicher nach einem der vorigen Ansprüche, **dadurch gekennzeichnet,**
**dass** der Speicherbehälter (B) in seinem Inneren eine oder eine Mehrzahl von Streben, Schaufeln, Flügeln oder Mitnehmern (MN) enthält, welche zur Drehimpulsübertragung zwischen dem Speicherbehälter (B) und der darin befindlichen Flüssigkeit (W) beizutragen imstande sind.

22. Mechanischer Energiespeicher nach einem der vorigen Ansprüche, **dadurch gekennzeichnet, dass**
- der Speicherbehälter (B) wenigstens eine Entnahmeöffnung aufweist, über welche aus dem Speicherbehälter (B) bei Rotation desselben unter Druck stehende Flüssigkeit (W) druckdicht entnehmbar ist und welche druckdicht in eine Druckleitung mündet, so dass dieselbe unter Druck stehende Flüssigkeit aus dem Speicherbehälter (B) enthält,
- die Druckleitung in einen Zusatzmechanismus mündet, welcher über die Druckleitung mit aus dem Speicherbehälter (B) kommender, unter Druck stehender Flüssigkeit antreibbar ist,
- und der über die Druckleitung angetriebene Zusatzmechanismus die Rotation des Speicherbehälters (B) zu beschleunigen imstande ist oder zu beschleunigen versucht.

23. Verfahren zum Betreiben eines mechanischen Energiespeichers, welcher eine rotierbar gelagerte, zur Speicherung von Rotationsenergie dienende Schwungmasse und einen Antrieb, insbesondere Motor, aufweist, **dadurch gekennzeichnet**,
ein Speicherbehälter (B) verwendet wird, welcher
- Teil der Schwungmasse ist und mittels des Antriebs (M) in Rotation um eine Rotationsachse (A) versetzbar ist,
- und in welchen Flüssigkeit (W), z.B. Wasser oder Quecksilber, einfüllbar ist, so dass die eingefüllte Flüssigkeit (W) an der Rotation des Speicherbehälters (B) teilnimmt und somit ebenfalls Teil der Schwungmasse ist,
und Energie dadurch gespeichert wird, dass
- der Speicherbehälter (B) mittels des Antriebs (M) in Rotation versetzt und die in diesen eingefüllte Flüssigkeit (W) in Rotation versetzt werden.

24. Verfahren nach Anspruch 23, **dadurch gekennzeichnet,**
**dass** die Schwungmasse
- durch Einfüllen von Flüssigkeit (W) in den Speicherbehälter (B) vergrößert wird,
- oder durch Entnahme von Flüssigkeit (W) aus dem Speicherbehälter (B) vermindert wird.

25. Verfahren nach Anspruch 23 oder 24, **dadurch gekennzeichnet,**
**dass** als Antrieb (M) ein Elektromotor (M) verwendet wird, mittels welchem zur Energiespeicherung elektrische Energie in Rotationsenergie umgewandelt wird.

26. Verfahren nach einem der Ansprüche 23 bis 25, **dadurch gekennzeichnet,**
**dass** ein mit der Schwungmasse (B,W) gekoppelter Generator (GR) verwendet wird, mittels welchem zur Energierückgewinnung wenigstens ein Teil der Rotationsenergie der Schwungmasse in elektrische Energie umgewandelt wird.

27. Verfahren nach einem der Ansprüche 23 bis 26, **dadurch gekennzeichnet,**
**dass** zur Energierückgewinnung oder zu Vorbereitung derselben durch Ablassen oder Entnehmen von Flüssigkeit aus dem Speicherbehälter (B) über wenigstens eine an der Rotation desselben teilnehmende und daher die Rotationsachse (A) mit einer bestimmten Bahngeschwindigkeit (vB) umlaufende Auslassöffnung (D,D1,D2,D3,D4) ein auf den Speicherbehälter (B) oder die Schwungmasse wirkendes Drehmoment erzeugt wird, welches die Rotation des Speicherbehälters (B) zu beschleunigen imstande ist oder zu beschleunigen versucht.

28. Verfahren nach Anspruch 27, **dadurch gekennzeichnet,**
**dass** der über die Auslassöffnung (D,D1,D2,D3,D4) abgegebene Flüssigkeitsstrom und damit auch das hierdurch verursachte Drehmoment auf den Speicherbehälter (B) mittels einer Stellvorrichtung dosiert wird.

29. Verfahren nach Anspruch 28, **dadurch gekennzeichnet,**
**dass** zur Dosierung des über die Auslassöffnung (D,D1,D2,D3,D4) abgegebenen Flüssigkeitsstroms der Durchmesser oder die Größe der Auslassöffnung (D,D1,D2,D3,D4) mittels der Stellvorrichtung fernbetätigt verändert wird.

30. Verfahren nach einem der Ansprüche 27 bis 29, **dadurch gekennzeichnet,**
**dass** die durch die Auslassöffnung austretende Flüssigkeit in Bezug auf die Auslassöffnung
- senkrecht nach unten abgegeben wird oder
- mit einer nach unten gerichteten Geschwindigkeitskomponente abgegeben wird.

31. Verfahren nach einem der Ansprüche 27 bis 29, **dadurch gekennzeichnet,**
**dass** die Auslassöffnung (D,D1,D2,D3,D4) so orientiert wird, dass die austretende Flüssigkeit beim Durchströmen der Auslassöffnung (D,D1,D2,D3,D4) bezüglich derselben eine Strömungsrichtung aufweist, welche
- der Bahngeschwindigkeit (vB) der Auslassöffnung (D,D1,D2,D3,D4) entgegengerichtet ist
- oder eine der Bahngeschwindigkeit (vB) der Auslassöffnung (D,D1,D2,D3,D4) entgegengerichtete Komponente aufweist,
und durch Entnehmen oder Ablassen von Flüssigkeit über die Auslassöffnung (D,D1,D2,D3,D4) aufgrund des Rückstoßes der austretenden Flüssigkeit ein Drehmoment auf den Speicherbehälter (B) erzeugt wird, welches die Rotation des Speicherbehälters (B) zu beschleunigen imstande ist oder zu beschleunigen versucht.

32. Verfahren nach Anspruch 31, **dadurch gekennzeichnet,**
**dass** der Abstand der Auslassöffnung (D,D1,D2,D3,D4) von der Rotationsachse (A) so gewählt oder mittels einer Verstelleinrichtung so eingestellt wird, dass die austretende Flüssigkeit beim Durchströmen der Auslassöffnung (D,D1,D2,D3,D4) bezüglich derselben eine Ausströmgeschwindigkeit (vA) aufweist, deren Betrag vom Betrag der Bahngeschwindigkeit (vB) der Auslassöffnung (D,D1,D2,D3,D4) um höchstens 30%, bevorzugt um höchstens 10%, abweicht.

33. Verfahren nach Anspruch 32, **dadurch gekennzeichnet,**
**dass** mittels der Verstellvorrichtung
- der Abstand der Auslassöffnung (D,D1,D2,D3,D4) von der Rotationsachse (A) bei sich veränderndem Befüllungsgrad des Speicherbehälters (B) automatisch so nachgestellt wird,
- oder der Abstand der Auslassöffnung (D,Dl,D2,D3,D4) von der Rotationsachse (A) bei sich verändernder Drehzahl des Speicherbehälters (B) automatisch so nachgestellt wird,
- oder der Abstand der Auslassöffnung (D,D1,D2,D3,D4) von der Rotationsachse (A) bei sich veränderndem Befüllungsgrad und sich gleichzeitig verändernder Drehzahl des Speicherbehälters (B) automatisch so nachgestellt wird,
**dass** die relative Abweichung
- zwischen dem Betrag der auf die Auslassöffnung (D,D1,D2,D3,D4) bezogenen Ausströmgeschwindigkeit (vA)
- und dem Betrag der Bahngeschwindigkeit (vB)
unter 30%, bevorzugt unter 10%, bleibt.

34. Verfahren nach einem der Ansprüche 27 bis 33, **dadurch gekennzeichnet,**
**dass** die Ausströmgeschwindigkeit (vA), mit welcher die ausströmende Flüssigkeit die Auslassöffnung (D,D1,D2,D3,D4) durchströmt, mittels einer der Auslassöffnung (D,D1,D2,D3,D4) vorgeschalteten Beeinflussungseinrichtung, insbesondere Druckverminderer, verändert, begrenzt oder auf einen bestimmten Wert eingestellt wird.

35. Verfahren nach Anspruch 31 und 34, **dadurch gekennzeichnet,**
**dass** die Ausströmgeschwindigkeit der durch die Auslassöffnung (D,D1,D2,D3,D4) austretenden Flüssigkeit mittels der Beeinflussungseinrichtung so eingestellt wird, dass die austretende Flüssigkeit beim Durchströmen der Auslassöffnung (D,D1,D2,D3,D4) bezüglich derselben eine Ausströmgeschwindigkeit (vA) aufweist, deren Betrag vom Betrag der Bahngeschwindigkeit (vB) der Auslassöffnung (D,D1,D2,D3,D4) um höchstens 30%, bevorzugt um höchstens 10%, abweicht.

36. Verfahren nach Anspruch 35, **dadurch gekennzeichnet,**
**dass** mittels der Beeinflussungseinrichtung
- die Ausströmgeschwindigkeit bei sich veränderndem Befüllungsgrad des Speicherbehälters (B) automatisch so nachgestellt wird,
- oder die Ausströmgeschwindigkeit bei sich verändernder Drehzahl des Speicherbehälters (B) automatisch so nachgestellt wird,
- oder die Ausströmgeschwindigkeit bei sich veränderndem Befüllungsgrad und sich gleichzeitig ändernder Drehzahl des Speicherbehälters (B) automatisch so nachgestellt wird,
**dass** die relative Abweichung
- zwischen dem Betrag der auf die Auslassöffnung (D,D1,D2,D3,D4) bezogenen Ausströmgeschwindigkeit (vA)
- und dem Betrag der Bahngeschwindigkeit (vB)
unter 30%, bevorzugt unter 10%, bleibt.

37. Verfahren nach einem der Ansprüche 27 bis 36, **dadurch gekennzeichnet,**
**dass** die Auslassöffnung (D,D1,D2,D3,D4) so angeordnet wird, dass diejenige Verbindungslinie (VL,VL') von der Mitte der Auslassöffnung (D) zur Rotationsachse (A), welche
- zur Oberfläche (O) der Flüssigkeit (W)
- oder zur Extrapolation (EX) der Oberfläche (O) nach außerhalb des Speicherbehälters (B)
senkrecht steht, um einen Faktor X länger ist als derjenige Teil dieser Verbindungslinie (VL,VL'), welcher von der Rotationsachse (A)
- bis zur Oberfläche (O)
- oder bis zur Extrapolation (EX) der Oberfläche (O)
reicht, wobei der Faktor X eine Zahl zwischen 1,3 und 1,55, bevorzugt zwischen 1,40 und 1,45 ist.

38. Verfahren nach einem der Ansprüche 23 bis 37, **dadurch gekennzeichnet,**
**dass** zur Energiespeicherung Flüssigkeit in den Speicherbehälter (B) eingefüllt und hierbei die Drehzahl desselben konstant gehalten wird.

39. Verfahren nach einem der Ansprüche 23 bis 38, **dadurch gekennzeichnet,**
**dass** zur Energierückgewinnung Flüssigkeit aus dem Speicherbehälter (B) abgelassen oder entnommen und hierbei die Drehzahl des Speicherbehälters (B) konstant gehalten wird.

40. Verfahren nach einem der Ansprüche 23 bis 39, **dadurch gekennzeichnet,**
**dass** zur Energierückgewinnung Flüssigkeit (W) aus dem rotierenden Speicherbehälter (B) einer Kraftmaschine, insbesondere Turbine oder Hydraulikmotor, so zugeführt wird, dass die der Kraftmaschine zugeführte Flüssigkeit die Kraftmaschine unter Abgabe von kinetischer Energie antreibt und die Kraftmaschine auf diese Weise imstande ist, wenigstens einen Teil der Rotationsenergie der Schwungmasse in elektrische Energie umzuwandeln.

41. Verfahren nach einem der Ansprüche 23 bis 40, **dadurch gekennzeichnet, dass**
- mittels des Antriebs (M) unabhängig vom Füllstand der Flüssigkeit (W) im Speicherbehälter (B) die Drehzahl des Speicherbehälters (B) konstant gehalten wird,
- oder mittels des Antriebs und einer damit verbundenen Regelungseinheit unabhängig vom Füllstand der Flüssigkeit (W) im Speicherbehälter (B) die Drehzahl des Speicherbehälters (B) auf einen vorgebbaren Sollwert geregelt wird.

42. Verfahren nach einem der vorigen Ansprüche 23 bis 41, **dadurch gekennzeichnet,**
**dass** der Speicherbehälter (B) wenigstens eine Entnahmeöffnung aufweist, über welche zur Energierückgewinnung oder zur Vorbereitung derselben aus dem Speicherbehälter (B) bei Rotation desselben unter Druck stehende Flüssigkeit (W) druckdicht entnommen und druckdicht einem Zusatzmechanismus zugeführt wird, welcher hierdurch mit aus dem Speicherbehälter (B) kommender Flüssigkeit angetrieben wird und die Rotation des Speicherbehälters (B) beschleunigt oder zu beschleunigen versucht.

43. Verfahren nach einem der Ansprüche 101 bis 42, **dadurch gekennzeichnet,**
**dass** zur Vermeidung von Unwucht die Zufuhr von Flüssigkeit in den Speicherbehälter (B) und die Entnahme oder das Ablassen von Flüssigkeit aus dem Speicherbehälter (B) jeweils achsensymmetrisch zur Rotationsachse (A) vorgenommen wird.

44. Verfahren nach Anspruch 26 und einem der Ansprüche 27 bis 37, **dadurch gekennzeichnet,**
**dass** zur Rückgewinnung von Rotationsenergie eines Netzgenerators, insbesondere eines solchen, welcher in einem Kraftwerk betrieben wird, und welcher zur Einspeisung von elektrischer Energie in ein Stromnetz vorgesehen ist und von seinem Antriebsaggregat, z.B. Dampfturbine, und vom Stromnetz, abgekoppelt ist und mit einer Drehzahl N1 rotiert, ein Getriebe verwendet wird und vorgegangen wird wie folgt:
a) der Speicherbehälter (B) wird bei vom Stromnetz elektrisch abgekoppeltem Generator (GR) mittels des Antriebs (M) auf eine vorgebbare Drehzahl B1 gebracht, welche sich von N1 um einen Faktor X1 unterscheidet, wobei X1 das Übersetzungsverhältnis des Getriebes ist, so dass N1 = X1*B1 und B1 = N1/X1 gilt,
b) die Wellen des Netzgenerators und des Generators (GR) werden über das Getriebe gekoppelt,
c) in den Speicherbehälter (B) wird Flüssigkeit (W) eingefüllt, bis seine Drehzahl auf einen Wert B2 und die Drehzahl des Netzgenerators von N1 auf einen Wert N2=N1*(B2/B1) gesunken ist,
d) die Wellen des Netzgenerators und des Generators (GR) werden voneinander abgekoppelt,
e) durch Ablassen oder Entnehmen von Flüssigkeit über die Auslassöffnung (D,D1,D2,D3,D4) ein Drehmoment auf den Speicherbehälter (B) erzeugt, welches die Rotation desselben beschleunigt, bis seine Drehzahl wieder den Wert B1 erreicht hat,
f) der Generator GR wird elektrisch an das Stromnetz angekoppelt,
g) durch weiteres Ablassen von Flüssigkeit (W) über die Auslassöffnung (D,D1,D2,D3,D4) wird ein Drehmoment auf den Speicherbehälter (B) erzeugt, welches die Rotation desselben zu beschleunigen versucht, und die hierdurch zurückgewonnene Energie ohne Änderung der Drehzahl des Speicherbehälters (B) vom Generator (GR) in elektrische Energie umgewandelt und in das Stromnetz eingespeist.

45. Verfahren, nach Anspruch 44, **dadurch gekennzeichnet,**
**dass** die Drehzahl B1 zu 3000 U/min vorgegeben wird.

46. Verfahren nach einem der Ansprüche 23 bis 45, **dadurch gekennzeichnet,**
**dass** der Speicherbehälter (B) nicht vollständig mit Flüssigkeit (W) gefüllt wird.
